# EUROPEAN PATENT APPLICATION

(11) **EP 4 685 911 A1**
(43) Date of publication of application: **28.01.2026**
(21) Application number: 24781082.3
(22) Date of filing: 18.03.2024
(51) Int. Cl.: H01M 10/0585, H01M 4/13, H01M 4/36, H01M 4/38, H01M 4/62, H01M 10/052, H01M 10/0562, H01M 10/42, H01M 4/66

(54) **ALL-SOLID-STATE SECONDARY BATTERY**

(30) Priority: 26.03.2023 KR 20230039379; 05.06.2023 KR 20230072377
(71) Applicant: SAMSUNG SDI CO., LTD., Yongin-si, Gyeonggi-do 17084 (KR)
(72) Inventor: SON, In Hyuk, Yongin-Si Gyeonggi-do 17084 (KR); JO, Sung Nim, Yongin-Si Gyeonggi-do 17084 (KR); SHIM, Kyu Eun, Yongin-Si Gyeonggi-do 17084 (KR); PARK, Tae Hyun, Yongin-Si Gyeonggi-do 17084 (KR); LEE, Ji Eun, Yongin-Si Gyeonggi-do 17084 (KR)
(74) Representative: Meissner Bolte Partnerschaft mbB
(86) International application number: PCT/KR2024/003359
(87) International publication number: WO 2024/205091

(57) **Abstract**

This all-solid-state secondary battery comprises a positive electrode layer, a negative electrode layer, and a solid electrolyte layer disposed between the positive electrode layer and the negative electrode layer, wherein: the positive electrode layer comprises a positive electrode current collector and a positive electrode active material layer; the solid electrolyte layer includes a sulfide-based solid electrolyte; the negative electrode layer comprises a negative electrode current collector, a first negative electrode active material layer, and a first protective layer disposed between the negative electrode current collector and the first negative electrode active material layer; the first negative electrode active material layer comprises a carbon-based material matrix and a metal-based negative electrode active material located within the carbon-based material matrix; the carbon-based material matrix has a first carbon-based nano structure; the first protective layer has a second carbon-based nano structure; and the specific heat capacity of the negative electrode current collector is 450 J/Kg·K or more.

## Description

### Technical Field

One or more embodiments relate to an all-solid-state secondary battery.

### Background Art

The development of batteries providing high energy density and safety has been actively conducted recently. Lithium batteries are used in information devices, communication devices, vehicles, and the like. Because vehicles are related to people's lives, safety in vehicles is important.

A liquid electrolyte-containing lithium battery includes a flammable organic solvent. There are a high risk of overheating and fire in the event of a short circuit in liquid electrolyte-containing lithium batteries.

The risk of overheating and fire of a solid electrolyte is reduced as compared to that of a liquid electrolyte. Solid electrolyte-containing lithium batteries may provide improved safety as compared to liquid electrolyte-containing lithium batteries.

### Disclosure

### Technical Problem

A sulfide-based solid electrolyte reacts with a negative electrode current collector to cause side reactions, easily. For example, if a sulfide-based solid electrolyte is brought into contact with the negative electrode current collector during a charging and discharging process, side reactions occurring between the sulfide-based solid electrolyte and the negative electrode current collector may deteriorate lifespan of lithium batteries. Therefore, there is a need to develop methods of blocking contact between a sulfide-based solid electrolyte and a negative electrode current collector.

In a negative electrode active material layer is disposed between a solid electrolyte layer and a negative electrode current collector by a wet method, it is difficult to form a uniform thickness of the negative electrode active material layer. A thickness difference of the negative electrode active material layer may cause non-uniform plating of lithium and growth of lithium dendrite between the negative electrode active material layer and the negative electrode current collector. A short circuit may occur in a lithium battery due to the non-uniform plating of lithium and/or growth of lithium dendrite. There is a need to develop methods of reducing the thickness difference of the negative electrode active material layer.

In a negative electrode active material layer disposed between a solid electrolyte layer and a negative electrode current collector by a wet method, a negative electrode active material may easily aggregate in the negative electrode active material layer during a drying process. Non-uniform current density may be formed in the negative electrode active material layer due to the aggregated negative electrode active material. The non-uniform current density may cause non-uniform plating of lithium and/or growth of lithium dendrite between the negative electrode active material layer and the negative electrode current collector. Due to the non-uniform plating of lithium and/or growth of lithium dendrite, a short circuit may occur in a lithium battery. There is a need to develop methods of inhibiting aggregation of the negative electrode active material in the negative electrode active material layer.

Provided is an all-solid-state secondary battery having a new structure.

### Technical Solution

According to an aspect of the present disclosure, an all-solid-state secondary battery includes:
a positive electrode layer; a negative electrode layer; and a solid electrolyte layer disposed between the positive electrode layer and the negative electrode layer,
wherein the positive electrode layer includes: a positive electrode current collector; and a positive electrode active material layer, the solid electrolyte layer includes a sulfide-based solid electrolyte,
the negative electrode layer includes: a negative electrode current collector; a first negative electrode active material layer; and a first protective layer disposed between the negative electrode current collector and the first negative electrode active material layer,
the first negative electrode active material layer includes a carbon-based material matrix and a metal-based negative electrode active material located within the carbon-based material matrix,
the carbon-based material matrix includes a first carbon-based nanostructure, and the first protective layer includes a second carbon-based nanostructure, and
a specific heat capacity of the negative electrode current collector is 450 J/Kg·K or more.

According to another aspect of the present disclosure, an all-solid-state secondary battery includes:
a positive electrode layer; a negative electrode layer; and a solid electrolyte layer disposed between the positive electrode layer and the negative electrode layer,
wherein the positive electrode layer includes: a positive electrode current collector; and a positive electrode active material layer, the solid electrolyte layer includes a sulfide-based solid electrolyte,
the negative electrode layer includes: a negative electrode current collector; a first negative electrode active material layer; and a first protective layer disposed between the negative electrode current collector and the first negative electrode active material layer,
the first negative electrode active material layer includes a carbon-based material matrix and a metal-based negative electrode active material located within the carbon-based material matrix, and
the carbon-based material matrix includes a first carbon-based nanostructure, and the first protective layer includes a second carbon-based nanostructure.

### Advantageous Effects

By using the all-solid-state secondary battery having a new structure according to embodiments, thickness uniformity of the negative electrode active material layer may be improved and aggregation of the negative electrode active material may be inhibited, and thus the all-solid-state secondary battery having inhibited short circuits and improved cycle characteristics may be provided.

### Description of Drawings

FIG. 1 is a cross-sectional view of an all-solid-state secondary battery according to an exemplary embodiment.
FIG. 2 is a cross-sectional view of a bi-cell all-solid-state secondary battery according to an exemplary embodiment.
FIG. 3 is a cross-sectional view of an all-solid-state secondary battery according to an exemplary embodiment.
FIG. 4 is a cross-sectional view of an all-solid-state secondary battery according to an exemplary embodiment.
FIG. 5 is a cross-sectional view of a bi-cell all-solid-state secondary battery according to an exemplary embodiment.

### Best Mode

Various embodiments are illustrated in the accompanying drawings. The present inventive concept may, however, be embodied in many different forms and should not be construed as limited to the embodiments set forth herein. Rather, the embodiments are provided so that this disclosure will be thorough and complete, and will fully convey the scope of the present inventive concept to those skilled in the art. Like reference numerals in the drawings denote like elements.

It will be understood that when one element is referred to as being "on" another element, it may be directly on the other element, or intervening elements may also be present therebetween. On the contrary, when one element is referred to as being "directly on" another element, there is no intervening element therebetween.

Although the terms "first", "second", "third", and the like may be used herein to describe various elements, components, regions, layers, and/or sections, these elements, components, regions, layers and/or sections should not be limited by these terms. These terms are only used to distinguish one element, component, region, layer or section from another element, component, region, layer or section. Thus, a first element, component, region, layer, or section discussed below could be termed a second element, component, region, layer or section without departing from the teachings herein.

The terms used herein is for the purpose of describing particular embodiments only and is not intended to be limiting of the present inventive concept. As used herein, an expression used in the singular encompasses an expression used in plural including "at least one", unless otherwise indicated. The "at least one" should not be construed as singular. As used herein, the term "and/or" includes any and all combinations of one or more of the associated listed items. The terms used herein such as "including" and/or "having" are intended to indicate the existence of features, regions, integers, processes, components, and/or elements disclosed in the specification, and are not intended to preclude the possibility that one or more other features, regions, integers, processes, components, and/or elements thereof may exist or may be added.

Spatially relative terms, such as "under", "below", "lower", "on", "above", or "upper", may be used herein for easy description of the relationship of one element or feature to another element(s) or feature(s). It will be understood that the spatially relative terms are intended to encompass different orientations of a device in use or operation, in addition to the orientation depicted in the drawings. For example, if the device in the drawings is turned over, elements described as "below" other elements or features would then be oriented "above" the other elements or features. Thus, the exemplary term "below" may encompass both orientations of above and below. The device may be otherwise oriented (rotated 90 degrees or at other orientations) and the spatially relative descriptors used herein may be interpreted accordingly.

Unless otherwise defined, all terms (including technical and scientific terms) used herein have the same meaning as commonly understood by one or ordinary skill in the art to which this application belongs. Also, it will be further understood that terms, such as those defined in commonly used dictionaries, should be interpreted as having a meaning that is consistent with their meaning in the context of the relevant art and will not be interpreted in an idealized or overly formal sense unless expressly so defined herein.

Exemplary embodiments will be described herein with reference to schematic cross-sectional view of ideal embodiments. As such, variations are to be expected from the shapes of the illustrations as a result, for example, of manufacturing techniques and/or tolerances. Thus, exemplary embodiments described herein should not be construed as being limited to the particular shapes of regions illustrated herein but are to include deviations in shapes that result, for example, from manufacturing. For example, a region illustrated or described as flat may, typically, have rough and/or nonlinear features. Moreover, sharp angles illustrated in the drawings may be rounded. Thus, the regions illustrated in the drawings are schematic in nature and their shapes are not intended to illustrate the actual shape of a region and are not intended to limit the scope of claims.

The term "Group" refers to a group of elements in the periodic table numbered from 1 to 18 classified according to a classification system of The International Union of Pure and Applied Chemistry ("IUPAC").

In the present disclosure, the "specific heat capacity" may be measured by using, for example, a Differential Scanning Calorimeter (DSC).

In the present disclosure, the "aspect ratio" may be measured by using, for example, images obtained by a scanning electron microscope (SEM), a transmission electron microscope (TEM), or an atomic force microscope (AFM).

In the present disclosure, the "nanostructure", "length", "width", "thickness", "diameter" and/or "aligned angle" of the first carbon-based nanostructure, the second carbon-based nanostructure, and the third carbon-based nanostructure may be measured by using images obtained by a scanning electron microscope (SEM), a transmission electron microscope (TEM), or an atomic force microscope (AFM).

In the present disclosure, the "thickness" and/or "diameter" of the core and shell of the negative electrode active material may be measured by using images obtained, for example, by a scanning electron microscope (SEM), a transmission electron microscope (TEM), or an atomic force microscope (AFM).

In the present disclosure, the "porosity", "specific area", "pores size", and "pore volume" may be measured, for example, by the gas adsorption method. Gas used in the gas adsorption method may be, for example, nitrogen.

In the present disclosure, the "particle diameter" of particles indicates an average diameter of spherical particles or an average length of major axes of non-spherical particles. Particle diameters may be measured using a particle size analyzer (PSA). The "particle diameter" is, for example, an average particle diameter. The "average particle diameter" is, for example, a median particle diameter (D50).

D50 refers to a particle diameter corresponding to 50 % of the particles in a cumulative distribution curve measured by a laser diffraction method in which particles are accumulated in the order of particle diameter from the smallest particle to the largest particle.

D90 refers to a particle diameter corresponding to 90 % of the particles in a cumulative distribution curve measured by a laser diffraction method in which particles are accumulated in the order of particle diameter from the smallest particle to the largest particle.

D10 refers to a particle diameter corresponding to 10 % of the particles in a cumulative distribution curve measured by a laser diffraction method in which particles are accumulated in the order of particle diameter from the smallest particle to the largest particle.

Alternatively, in the present disclosure, the "particle diameter" is measured, for example, based on manuals or using software from cross-sectional images of a scanning electron microscope and/or a transmission electron microscope, and is an arithmetic average of particle diameters of a plurality of particles.

In the present disclosure, the "metal" includes metals and metalloids such as silicon and germanium in an elemental or ionic state.

In the present disclosure, the "alloy" refers to any combination of two or more metals.

In the present disclosure, the "electrode active material" refers to a material for electrodes allowing lithiation and delithiation.

In the present disclosure, the "positive electrode active material" refers to a material for positive electrodes allowing lithiation and delithiation.

In the present disclosure, the "negative electrode active material" refers to a material for negative electrodes allowing lithiation and delithiation.

In the present disclosure, the "lithiation" and "lithiating" refer to a process of introducing lithium into an electrode active material.

In the present disclosure, the "delithiation" and "delithiating" refer to a process of removing lithium from an electrode active material.

In the present disclosure, the "charging" and "charge" refer to a process of supplying electrochemical energy to a battery.

In the present disclosure, the "discharging" and "discharge" refer to a process of removing electrochemical energy from a battery.

In the present disclosure, the "positive electrode" and "cathode" refer to an electrode in which electrochemical reduction and lithiation occur during discharging.

In the present disclosure, the "negative electrode" and "anode" refer to an electrode in which electrochemical oxidation and delithiation occur during discharging.

While some embodiments have been described, alternatives, modifications, variations, improvements, and substantial equivalents that are or may be presently unforeseen may arise to applicants or others skilled in the art. The appended claims as filed and as they may be amended are intended to embrace all such alternatives, modification, variations, improvements, and substantial equivalents.

Hereinafter, an all-solid-state secondary battery according to exemplary embodiments will be described in detail.

### [All-solid-state Secondary Battery]

An all-solid-state secondary battery according to an embodiment includes: a positive electrode layer; a negative electrolyte layer; and a solid electrolyte layer disposed between the positive electrode layer and the negative electrolyte layer, wherein the positive electrode layer includes: a positive electrode current collector; and a positive electrode active material layer, the solid electrolyte layer includes a sulfide-based solid electrolyte, the negative electrolyte layer includes: a negative electrode current collector; a first negative electrode active material layer; and a first protective layer disposed between the negative electrode current collector and the first negative electrode active material layer, the first negative electrode active material layer includes a carbon-based material matrix and a metal-based negative electrode active material located within the carbon-based material matrix, the carbon-based material matrix includes a first carbon-based nanostructure, the first protective layer includes a second carbon-based nanostructure, and a specific heat capacity of the negative electrode current collector is 450 J/Kg·K or more.

Because the first negative electrode active material layer includes the carbon-based nanostructure arranged by a dry method, defects such as non-uniform thickness of a negative electrode active material layer and aggregation of a negative electrode active material occurring in a wet negative electrode active material layer may be prevented. Because the all-solid-state secondary battery includes the first negative electrode active material layer, non-uniform plating of lithium and/or growth of lithium dendrite are inhibited during a charging and discharging process. As a result, a short circuit of the all-solid-state secondary battery is prevented and lifespan characteristics thereof are improved. Because the all-solid-state secondary battery includes the first protective layer, side reactions caused by a contact between the sulfide-based solid electrolyte and the negative electrode current collector are inhibited. As a result, reversibility of electrode reactions are improved and lifespan characteristics of the all-solid-state secondary battery are improved.

Because the specific heat capacity of the negative electrode current collector is 450 J/Kg·K or more, local changes in temperature of the negative electrode layer caused by heat generated during charging and discharging of the all-solid-state secondary battery may be reduced. Therefore, deterioration of the all-solid-state secondary battery caused by the local changes of temperature may be effectively prevented.

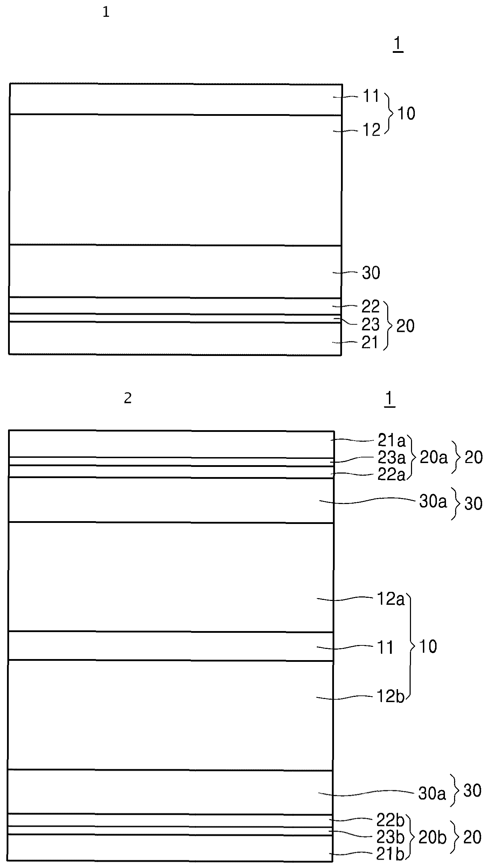

Referring to FIGS. 1 to 5, an all-solid-state secondary battery 1 includes: a positive electrode layer 10; a negative electrolyte layer 20; and a solid electrolyte layer 30 disposed between the positive electrode layer 10 and the negative electrolyte layer 20, wherein the positive electrode layer 10 includes: a positive electrode current collector 11; and a positive electrode active material layer 12, the solid electrolyte layer 30 includes a sulfide-based solid electrolyte, the negative electrolyte layer 20 includes a negative electrode current collector 21; a first negative electrode active material layer 22; and a first protective layer 23 disposed between the negative electrode current collector 21 and the first negative electrode active material layer 22, the first negative electrode active material layer 22 includes a carbon-based material matrix and a metal-based negative electrode active material located within the carbon-based material matrix, and the carbon-based material matrix includes a first carbon-based nanostructure, the first protective layer 23 includes a second carbon-based nanostructure, and a specific heat capacity of the negative electrode current collector 21 is 450 J/Kg·K or more.

### [Negative Electrode Layer]

### [Negative Electrode Layer: Carbon-based Material Matrix]

Referring to FIGS. 1 to 5, the negative electrode layer 20 includes: a negative electrode current collector 21; a negative electrode active material layer 22; and a first protective layer 23, 23a, or 23b disposed between the negative electrode current collector 21 and the first negative electrode active material layer 22. The first negative electrode active material layer 22 includes a carbon-based material matrix and a metal-based negative electrode active material located within the carbon-based material matrix.

The first negative electrode active material layer 22 includes a carbon-based material matrix. The carbon-based material matrix includes a first carbon-based nanostructure. The carbon-based nanostructure has a nano-scale dimension and is a structure formed of a carbon-based material. The carbon-based nanostructure may include, for example, a one-dimensional carbon-based nanostructure, a two-dimensional carbon-based nanostructure, a three-dimensional carbon-based nanostructure, or any combination thereof. The one-dimensional carbon-based nanostructure may include, for example, carbon nanorod, carbon nanofiber, carbon nanotube, or any combination thereof. The two-dimensional carbon-based nanostructure may include, for example, carbon nanosheet, carbon nanobelt, carbon nanoflake, graphene, graphene oxide (GO), reduced graphene oxide (rGO), or any combination thereof. The three-dimensional carbon-based nanostructure may be a structure in which a plurality of one-dimensional carbon-based nanostructures and/or two-dimensional carbon-based nanostructures are connected or stacked. The first carbon-based nanostructure may include, for example, a two-dimensional nanostructure. The first carbon-based nanostructure may include, for example, graphene, graphene oxide (GO), reduced graphene oxide (rGO), or any combination thereof.

The carbon-based material matrix may include, for example, the first carbon-based nanostructure arranged in a direction. The first carbon-based nanostructure may include, for example, graphene. The carbon-based material matrix may include graphene arranged in a direction. The carbon-based material matrix may include, for example, the first carbon-based nanostructure arranged in a direction parallel to a surface of the negative electrode current collector 21. The carbon-based material matrix may include, for example, graphene. The carbon-based material matrix may include, for example, graphene arranged in a direction parallel to the surface of the negative electrode current collector 21. The graphene may be arranged, for example, at an angle of -30° to 30°, -20° to 20°, -10° to 10°, or -5° to 5° with the surface of the negative electrode current collector 21. Because the first carbon-based nanostructure is arranged in a direction parallel to the surface of the negative electrode current collector 21 in the carbon-based material matrix, the growth of lithium dendrite from the first negative electrode active material layer 22 may more effectively be inhibited. In addition, the carbon-based material matrix may have a structure in which the first carbon-based nanostructure is stacked in a thickness direction of the first negative electrode active material layer 22. In the carbon-based material matrix, a plurality of first carbon-based nanostructures may be stacked along the thickness direction of the first negative electrode active material layer 22. The carbon-based material matrix may include, for example, a plurality of first carbon-based nanostructure layers stacked in the thickness direction of the first negative electrode active material layer 22. Because the first carbon-based nanostructures are stacked in the thickness direction of the first negative electrode active material layer 22 in the carbon-based material matrix, structural density and structural stability of the first negative electrode active material layer 22 may further be improved.

The carbon-based material matrix may include, for example, the first carbon-based nanostructures irregularly arranged without being arranged. The first carbon-based nanostructure includes, for example, graphene, and the carbon-based material matrix may include graphene irregularly located without being aligned. The carbon-based material matrix may include, for example, the first carbon-based nanostructures irregularly and/or randomly located with respect to the surface of the negative electrode current collector 21. The carbon-based material matrix may include, for example, graphene, and the carbon-based material matrix may include graphene irregularly and/or randomly located with respect to the surface of the negative electrode current collector 21. Because the first carbon-based nanostructures are irregularly and/or randomly located with respect to the surface of the negative electrode current collector 21 in the carbon-based material matrix, ion conduction paths and/or electron conduction paths through the first negative electrode active material layer 22 may be diversified. Therefore, internal resistance of the all-solid-state secondary battery including the carbon-based material matrix may further be reduced.

The carbon-based material matrix may include, for example, crystalline carbon, amorphous carbon, or any combination thereof. The carbon-based material matrix may include the first carbon-based nanostructure, and the first carbon-based nanostructure may include, for example, a crystalline carbon nanostructure, an amorphous carbon nanostructure, or any combination thereof. A carbon-based material matrix formed of the crystalline carbon nanostructure may have high crystallinity. A carbon-based material matrix formed of the amorphous carbon nanostructure may have low crystallinity. Because the carbon-based material matrix includes, for example, the first carbon-based nanostructures arranged in a direction, the carbon-based material matrix may have high crystallinity. As an amount of the first carbon-based nanostructures arranged in a direction increases in the carbon-based material matrix, crystallinity of the first negative electrode active material layer 22 may increase. Because the carbon-based material matrix includes, for example, the first carbon-based nanostructures irregularly arranged, the carbon-based material matrix may have low crystallinity. As an amount of the irregularly arranged first carbon-based nanostructures increases in the carbon-based material matrix, crystallinity of the first negative electrode active material layer 22 may decrease. Crystallinity of the carbon-based material matrix may be determined by using, for example, a Raman spectrum, an XRD spectrum, a high-resolution transmission electron microscope, or the like.

The carbon-based material matrix may include the first carbon-based nanostructure, and the first carbon-based nanostructure may be doped with, for example, a dopant. The dopant may include an n-type dopant, a p-type dopant, or any combination thereof. The n-type dopant having more electrons than carbon is a dopant used to introduce electrons into a carbon-based material. The p-type dopant having less electrons than carbon may be a dopant used to introduce holes into the carbon-based material. The first carbon-based nanostructure may include, for example, dopant-doped graphene. The doped graphene may include, for example, a n-type dopant, a p-type dopant, or any combination thereof. The dopant may include, for example, nitrogen (N), phosphorus (P), boron (B), sulfur (S), fluorine (F), chlorine (CI), bromine (Br), germanium (Ge), gallium (Ga), or any combination thereof. For example, nitrogen (N) and phosphorus (P) may be n-type dopants. For example, gallium (Ga) may be a p-type dopant. An amount of the dopant included in the doped first carbon-based nanostructure may be, for example, 3 at% or less, 2 at% or less, 1 at% or less, or 0.5 at% or less. Because the first carbon-based nanostructure is doped with the dopant, conductivity of the first carbon-based nanostructure may further be improved. Because the carbon-based material matrix includes the doped first carbon-based nanostructures, internal resistance of the first negative electrode active material layer 22 may decrease and interfacial resistance between the first negative electrode active material layer 22 and the solid electrolyte layer 30 may further be reduced. As a result, the all-solid-state secondary battery may have reduced internal resistance and further improved high rate characteristics.

The carbon-based material matrix may not include the binder. Because the carbon-based material matrix does not include a binder, the first negative electrode active material layer 22 may have reduced internal resistance and improved ionic conductivity and/or electronic conductivity. As a result, cycle characteristics such as high rate characteristics of the all-solid-state secondary battery may be improved.

The carbon-based material matrix may further have, for example, pores located within the carbon-based material matrix. Because the carbon-based material matrix includes a plurality of first carbon-based nanostructures and the plurality of first carbon-based nanostructures are irregularly arranged therein, pores defined by the plurality of first carbon-based nanostructures may be formed in the carbon-based material matrix. Because the carbon-based material matrix includes, for example, the first carbon-based nanostructures arranged in a direction, a low porosity may be obtained. As an amount of the first carbon-based nanostructures arranged in a direction increases in the carbon-based material matrix, the number of pores included in the carbon-based material matrix may decrease. Therefore, the first negative electrode active material layer 22 may have reduced porosity. Because the carbon-based material matrix includes, for example, the first carbon-based nanostructures irregularly arranged, the porosity of the carbon-based material matrix may increase. As an amount of the first carbon-based nanostructures irregularly arranged in the carbon-based material matrix increases, the number of pores included in the carbon-based material matrix may increase. Therefore, the first negative electrode active material layer 22 may have an increased porosity. The porosity of the carbon-based material matrix may be measured, for example, by a gas adsorption method.

The carbon-based material matrix may be, for example, a lithium host. The carbon-based material matrix may be, for example, an electrochemically inert lithium host. The electrochemically inert lithium host may be a lithium host acting as a conductor for electron conduction and/or a receptor for receiving plated lithium without forming a compound via reaction with lithium. Deterioration of the all-solid-state secondary battery 1 caused by changes in a volume and/or physical properties of the first negative electrode active material layer 22 during charging and discharging may more effectively be inhibited because the carbon-based material matrix acts as the electrochemically inert lithium host. Therefore, electron conduction and/or lithium plating may more effectively be performed in the first negative electrode active material layer 22 because the carbon-based material matrix acts as an electrochemically inert lithium host. In other embodiments, the carbon-based material matrix may be, for example, an electrochemically active lithium host. The electrochemically active lithium host may be a lithium host reacting with lithium to form a compound. Because the carbon-based material matrix acts as the electrochemically active lithium host, irregular plating of lithium may more effectively prevented in the first negative electrode active material layer 22, and thus cycle characteristics of the all-solid-state secondary battery 1 may further be improved. Therefore, because the carbon-based material matrix acts as the electrochemically active lithium host, lithium may be uniformly plated in the first negative electrode active material layer 22. Because the carbon-based material matrix further has pores, lithium metal may be plated in the pores.

### [Negative Electrode Layer: Negative electrode active material]

Referring to FIGS. 1 to 5, the negative electrolyte layer 20, 20a, or 20b includes a negative electrode current collector 21, 21a, or 21b; and a first negative electrode active material layer 22, 22a, or 22b disposed on the negative electrode current collector. The first negative electrode active material layer 22 includes a metal-based negative electrode active material located within the carbon-based material matrix.

The metal-based negative electrode active material is a negative electrode active material forming an alloy or compound with lithium. The metal-based negative electrode active material may include, for example, at least one alloy-forming element selected from gold (Au), platinum (Pt), palladium (Pd), silicon (Si), silver (Ag), aluminum (Al), bismuth (Bi), tin (Sn), and zinc (Zn), but is not limited thereto, and any materials commonly used in the art as metal-based negative electrode active material forming an alloy or compound with lithium may also be used. For example, nickel (Ni) is not a metal-based negative electrode active material, because Ni does not form an alloy with lithium. For example, the metal-based negative electrode active material may not include a metal oxide. The metal-based negative electrode active material may include, for example, a metal forming an alloy or compound with lithium, but may not include an oxide of the metal. The metal-based negative electrode active material may include, for example, silver (Ag), but may not include an oxide of silver (Ag) (e.g., Ag₂O).

The metal-based negative electrode active material may be, for example, a composite negative electrode active material having a core/shell structure. The metal-based negative electrode active material may include: for example, a core; and a shell the disposed on the surface of the core. The shell may cover the core in whole or in part. The core may include, for example, a metal forming an alloy or compound with lithium. The metal forming an alloy or compound with lithium may include, for example, at least one ally-forming element selected from gold (Au), platinum (Pt), palladium (Pd), silicon (Si), silver (Ag), aluminum (Al), bismuth (Bi), tin (Sn), and zinc (Zn). The shell may include, for example, a carbon-based material. The shell may include, for example, a third carbon-based nanostructure. The third carbon-based nanostructure may be, for example, a carbon-based nanostructure identical to the first carbon-based nanostructure. The third carbon-based nanostructure may include, for example, graphene, graphene oxide, reduced graphene oxide, or any combination thereof. The third carbon-based material nanostructure may be distinguished from the first carbon-based nanostructure included in the carbon-based material matrix in terms of the composition and physical properties such as thickness, position, and crystallinity. For example, the third carbon-based nanostructure may constitute the shell of the metal-based negative electrode active material and may be distinguished from the carbon-based material matrix. The metal-based negative electrode active material may have, for example, a structure including a metal core including an alloy or compound with lithium; and a shell including the third carbon-based nanostructure disposed on the core. The metal-based negative electrode active material may have, for example, a structure including a metal core including an alloy or compound with lithium; and a shell including graphene disposed on the core. The shell may include, for example, amorphous carbon. Because the shell includes amorphous carbon, ion conduction and/or electron conduction between the core and the carbon-based material matrix may more easily be performed. The shell may be, for example, a coating layer of amorphous carbon disposed on the core. The metal-based negative electrode active material may have, for example, a structure including: a metal core including an alloy or compound with lithium; and a shell including amorphous carbon disposed on the core. The metal-based negative electrode active material may have, for example, a structure including: a metal core including an alloy or compound with lithium; and an amorphous carbon coating layer disposed on the core.

The metal-based negative electrode active material is, for example, in the form of particles. A particle diameter of the metal-based negative electrode active material in the form of particles is, for example, 2 µm or less, 1.5 µm or less, 1 µm or less, 0.5 µm or less, or 100 nm or less. The particle diameter of the negative electrode active material in the form of particles is, for example, 1 nm to 2 µm, 1 nm to 1.5 µm, 5 nm to 1 µm, 10 nm to 500 nm, 10 nm to 400 nm, 10 nm to 200 nm, or from 10 nm to 100 nm. Because the metal-based negative electrode active material has a particle diameter within the ranges described above, reversible absorbing and/or desorbing of lithium may be performed more easily during charging and discharging. The metal-based negative electrode active material may be a reduced product of a metal-based negative electrode active material precursor. The metal-based negative electrode active material may be a reduced product of a metal ion. Because the metal-based negative electrode active material is a reduced product of the metal ion, the metal-based negative electrode active material may be distributed in a uniformly dispersed state without aggregating. The particle diameter of the metal-based negative electrode active material is, for example, an arithmetic average of particle diameters of the metal-based negative electrode active material obtained by analyzing cross-sectional images of the first negative electrode active material layer 22 obtained by an electron microscope using software or manually. A particles of the metal-based negative electrode active material may include: a core; and a shell disposed on the surface of the core. A particle diameter of the core is, for example, 1 nm to 1 µm, 10 nm to 500 nm, 10 nm to 400 nm, 10 nm to 300 nm, 10 nm to 200 nm, or from 10 nm to 100 nm. A thickness of the shell has is, for example, 100 nm or less, 50 nm or less, 40 nm or less, 30 nm or less, 20 nm or less, or 10 nm or less. The thickness of the shell is, for example, 1 nm to 100 nm, 1 nm to 50 nm, 1 nm to 40 nm, 1 nm to 30 nm, 1 nm to 20 nm, or from 1 nm to 10 nm. Because the particle diameters and the thicknesses of the core and the shell are within the ranges described above, cycle characteristics of the all-solid-state secondary battery 1 including particles of the metal-based negative electrode active material may further be improved.

An amount of the metal-based negative electrode active material may be 10 parts by weight or less, 5 parts by weight or less, 3 parts by weight or less, or 2 parts by weight based on 100 parts by weight of the carbon-based material matrix. The amount of the metal-based negative electrode active material may be 0.1 to 10 parts by weight, 0.5 to 5 parts by weight, 0.5 to 3 parts by weight, or 0.5 to 2 parts by weight based on 100 parts by weight of the carbon-based material matrix. Because the amount of the metal-based negative electrode active material is within the range described above, cycle characteristics of the all-solid-state secondary battery 1 may further be improved. In comparison with a conventional first negative electrode active material layer 22 including a simple blend of the metal-based negative electrode active material and the carbon-based material, the first negative electrode active material layer 22 used in the all-solid-state secondary batteries 1 of FIGS. 1 to 5 may have a reduced amount of the metal-based negative electrode active material. Because the first negative electrode active material layer 22 includes the metal-based negative electrode active material dispersed in the carbon-based material matrix by a dry method, an all-solid-state secondary battery 1 having excellent cycle characteristics with a relatively low amount of the metal-based negative electrode active material may be provided.

The carbon-based material matrix may further include a carbon-based negative electrode active material located within the carbon-based material matrix. The carbon-based negative electrode active material is, for example, amorphous carbon. The amorphous carbon is, for example, carbon black (CB), acetylene black (AB), furnace black (FB), or Ketjen black (KB), but is not limited thereto, and any carbon classified as amorphous carbon in the art may also be used. Amorphous carbon is carbon that does not have crystallinity or has very low crystallinity and is distinguished from crystalline carbon or graphite-based carbon. The carbon-based negative electrode active material may be omitted.

### [Negative Electrode Layer: First Negative Electrode Active Material Layer]

A thickness of the first negative electrode active material layer 22 is, for example, 50 % or less, 40 % or less, 30 % or less, 20 % or less, 10 % or less, or 5 % or less of a thickness of the positive electrode active material layer 12. The thickness of the first negative electrode active material layer 22 is, for example, 20 µm or less, 10 µm or less, 7 µm or less, or 5 µm or less. The thickness of the first negative electrode active material layer 22 is, for example, 1 µm to 20 µm, 2 µm to 10 µm, 2 µm to 7 µm, or 2 µm to 5 µm. If the first negative electrode active material layer 22 is too thin, lithium dendrite formed between the first negative electrode active material layer 22 and the negative electrode current collector 21 breaks the first negative electrode active material layer 22, making it difficult to improve cycle characteristics of the all-solid-state secondary battery 1. If the first negative electrode active material layer 22 is too thick, energy density of the all-solid-state secondary battery 1 decreases, internal resistance of the all-solid-state secondary battery 1 is increased by the first negative electrode active material layer 22, making it difficult to improve cycle characteristics of the all-solid-state secondary battery 1.

As the thickness of the first negative electrode active material layer 22 decreases, a charging capacity of the first negative electrode active material layer 22 also decreases. The charging capacity of the first negative electrode active material layer 22 is, for example, 50 % or less, 40 % or less, 30 % or less, 20 % or less, 10 % or less, 5 % or less, or 2 % or less of a charging capacity of the positive electrode active material layer 12. The charging capacity of the first negative electrode active material layer 22 is, for example, 0.1 % to 50 %, 0.1 % to 40 %, 0.1 % to 30 %, 0.1 % to 20 %, 0.1 % to 10 %, 0.1 % to 5 %, or 0.1 % to 2 % based on the charging capacity of the positive electrode active material layer 12. If the charging capacity of the first negative electrode active material layer 22 is too low, the thickness of the first negative electrode active material layer 22 becomes too small, and thus lithium dendrite formed between the first negative electrode active material layer 22 and the negative electrode current collector 21 during repeated charging and discharging processes breaks the first negative electrode active material layer 22, making it difficult to improve cycle characteristics of the all-solid-state secondary battery 1. If the charging capacity of the first negative electrode active material layer 22 is too high, energy density of the all-solid-state secondary battery 1 decreases, and thus internal resistance of the all-solid-state secondary battery 1 is increased by the first negative electrode active material layer 22, making it difficult to improve cycle characteristics of the all-solid-state secondary battery 1. A ratio (C1/C2) of a charging capacity C1 of the first negative electrode active material layer 22 to a charging capacity C2 of the positive electrode active material layer 12 is, for example, 0.001 to 0.45, 0.001 to 0.4, 0.001 to 0.3, 0.001 to 0.2, 0.001 to 0.1, 0.001 to 0.05, or 0.001 to 0.02. The charging capacity of the positive electrode active material layer 12 is obtained by multiplying a charging capacity density (mAh/g) of the positive electrode active material by a mass of the positive electrode active material of the positive electrode active material layer 12. If various types of positive electrode active materials are used, charging capacity density×mass values of all of the positive electrode active materials are calculated respectively, and a sum of the values is regarded as the charging capacity of the positive electrode active material layer 12. The charging capacity of the first negative electrode active material layer 22 is calculated in the same manner. That is, the charging capacity of the first negative electrode active material layer 22 is obtained by multiplying a charging capacity density (mAh/g) of the negative electrode active material by a mass of the negative electrode active material of the first negative electrode active material layer 22. If various types of negative electrode active materials are used, charging capacity density×mass values of all of the negative electrode active materials are calculated respectively, and a sum of the values is regarded as the charging capacity of the first negative electrode active material layer 22. In this regard, the charging capacity densities of the positive electrode active material and the negative electrode active material are capacities measured using all-solid half-cells to which lithium metal is applied as a counter electrode. The charging capacities of the positive electrode active material layer 12 and the first negative electrode active material layer 22 are directly measured by charging capacity measurement using the all-solid half-cells. The charging capacity density is calculated by dividing the measured charging capacity by the mass of each active material. Alternatively, the charging capacity of the positive electrode active material layer 12 and the first negative electrode active material layer 22 may be an initial charging capacity measured during charging of a first cycle.

The first negative electrode active material layer 22 may be binder-free. Because the first negative electrode active material layer 22 is formed by a dry method, the first negative electrode active material layer 22 may not include a binder. Because the first negative electrode active material layer 22 does not include a binder, the first negative electrode active material layer 22 may have improved electronic conductivity and/or ionic conductivity and reduced internal resistance. Therefore, cycle characteristics, such as high rate characteristics, of the all-solid-state secondary battery 1 including the first negative electrode active material layer 22 may be improved. The first negative electrode active material layer may be prepared by a dry method such as CVD or PVD. The dry method used to form the first negative electrode active material layer is not particularly limited and any dry methods without using a binder commonly used in the art may also be used.

The thickness of the first negative electrode active material layer 22, 22a, and 22b may be greater than that of the first protective layer 23, 23a, and 23b. The thickness of the first negative electrode active material layer 22, 22a, or 22b may be 150 % or more, 200 % or more, 300 % or more, or 500 % or more of that of the first protective layer 23, 23a, or 23b. Because the thickness of the first negative electrode active material layer 22 is within the ranges described above, the thickness of the first protective layer 23, 23a, or 23b relatively decreases, and thus energy density of the all-solid-state secondary battery may further be improved.

In a Raman spectrum of the negative electrode layer 20, a peak intensity ratio (I_{D}/I_{G}) of D-band peak intensity (I_{D}) at around 1350 cm⁻¹ derived from amorphous carbon to G-band peak intensity (I_{G}) at around 1580 cm⁻¹ derived from crystalline carbon may be, for example, 20 or less, 15 or less, 10 or less, 6 or less, 4 or less, 3 or less, 1 or less, 0.8 or less, or 0.5 or less.

In the Raman spectrum of the negative electrode layer 20, the peak intensity ratio (I_{D}/I_{G}) of D-band peak intensity (I_{D}) at around 1350 cm⁻¹ derived from amorphous carbon to G-band peak intensity (I_{G}) at around 1580 cm⁻¹ derived from crystalline carbon may be, for example, greater than 0, 0.01 or more, 0.05 or more, 0.1 or more, 0.3 or more, 0.5 or more, 1.0 or more, or 1.5 or more.

In the Raman spectrum of the negative electrode layer 20, the peak intensity ratio (I_{D}/I_{G}) of D-band peak intensity (I_{D}) at around 1350 cm⁻¹ derived from amorphous carbon to G-band peak intensity (I_{G}) at around 1580 cm⁻¹ derived from crystalline carbon may be, for example, greater than 0 to but not more than 20, greater than 0 but not more than 15, greater than 0 but not more than 10, 0.01 to 10, 0.01 to 6, 0.1 to 4, 0.5 to 3, 1.0 to 3, or 1.5 to 3. In the Raman spectrum of the negative electrode layer 20, the peak intensity ratio (I_{D}/I_{G}) of D-band peak intensity (I_{D}) at around 1350 cm⁻¹ derived from amorphous carbon to G-band peak intensity (I_{G}) at around 1580 cm⁻¹ derived from crystalline carbon may be, for example, 1 to 10, 1 to 6, 1 to 4, 1.5 to 4, 2 to 4, or 1.5 to 4. In the Raman spectrum of the negative electrode layer 20, the peak intensity ratio (I_{D}/I_{G}) of D-band peak intensity (I_{D}) at around 1350 cm⁻¹ derived from amorphous carbon to G-band peak intensity (I_{G}) at around 1580 cm⁻¹ derived from crystalline carbon may be, for example, 1 to 10, 1 to 6, 2 to 6, 3 to 6, or 3.5 to 6. The Raman spectrum is obtained from the first negative electrode active material layer 22 and the first protective layer 23 of the negative electrode layer 20. Because the negative electrode layer 20 has the peak intensity ratio within the ranges described above, deterioration of the negative electrode current collector 21 caused by the solid electrolyte may be inhibited more effectively. If the peak intensity ratio of the negative electrode layer 20 excessively increases, it may be difficult to effectively prevent deterioration of the negative electrode current collector 21 caused by the solid electrolyte. A negative electrode layer 20 including a nickel negative electrode current collector 21 may have a relatively lower peak intensity ratio than that of the negative electrode layer 20 including a copper negative electrode current collector 21.

A porosity of the negative electrode layer 20 obtained by using a nitrogen gas adsorption method (multi-point BET) may be, for example, 30 % or less, 25 % or less, 20 % or less, 15 % or less, 10 % or less, 5 % or less, 3 % or less, 2 % or less, 1 % or less, 0.8 % or less, or 0.5 % or less.

The porosity of the negative electrode layer 20 obtained by using the nitrogen gas adsorption method (multi-point BET) may be, for example, greater than 0 %, 0.1 % or more, 0.5 % or more, or 1 % or more.

The porosity of the negative electrode layer 20 obtained by using the nitrogen gas adsorption method (multi-point BET) may be, for example, greater than 0 but not more than 30 %, greater than 0 but not more than 25 %, greater than 0 but not more than 20 %, 0.1 to 15 %, 0.1 to 10 %, 1 to 10 %, or 2 to 8 %. The porosity of the negative electrode layer 20 obtained by using the nitrogen gas adsorption method (multi-point BET) may be, for example, 1 to 25 %, 2 to 15 %, 5 to 15 %, or 8 to 15 %. The porosity of the negative electrode layer 20 obtained by using the nitrogen gas adsorption method (multi-point BET) may be, for example, 1 to 25 %, 5 to 25 %, or 5 to 25 %. Because the porosity of the negative electrode layer 20 is within the ranges described above, deterioration of the negative electrode current collector 21 caused by the solid electrolyte may be prevented more effectively. If the porosity of the negative electrode layer 20 excessively increases, it may be difficult to effectively prevent deterioration of the negative electrode current collector 21 caused by the solid electrolyte.

### [Negative Electrode Layer: First Protective Layer]

Referring to FIGS. 1 to 5, the negative electrode layer 20 includes: a negative electrode current collector 21; a negative electrode active material layer 22; and a first protective layer 23, 23a, or 23b disposed between the negative electrode current collector 21 and the first negative electrode active material layer 22.

The first protective layer 23, 23a, or 23b is, for example, a conductive coating layer including a carbon-based material. Because the first protective layer 23, 23a, or 23b is a conductive coating layer, an increase in internal resistance of the all-solid-state secondary battery may be inhibited although the first protective layer 23, 23a, or 23b is added. The first protective layer 23, 23a, or 23b includes, for example, a second carbon-based nanostructure. The carbon-based nanostructure has a nano-scale dimension and is a structure formed of a carbon-based material. The carbon-based nanostructure may include, for example, a one-dimensional carbon-based nanostructure, a two-dimensional carbon-based nanostructure, a three-dimensional carbon-based nanostructure, or any combination thereof. The second carbon-based nanostructure may include, for example, a two-dimensional nanostructure. The second carbon-based nanostructure may include, for example, graphene, graphene oxide (GO), reduced graphene oxide (rGO), or any combination thereof. The second carbon-based nanostructure may be selected from the above-described first carbon-based nanostructures. The second carbon-based nanostructure may be doped with a dopant. The dopant-doped second carbon-based nanostructure may be selected from the first carbon-based nanostructures doped with a dopant.

The first protective layer 23, 23a, or 23b may include, for example, the second carbon-based nanostructure arranged in a direction with respect to the surface of the negative electrode current collector 21. The second carbon-based nanostructure may include, for example, graphene. The first protective layer 23, 23a, or 23b may include graphene arranged in a direction with respect to the surface of the negative electrode current collector 21.

The first protective layer 23, 23a, or 23b may include, for example, the second carbon-based nanostructures arranged in a direction parallel to the surface of the negative electrode current collector 21. The second carbon-based nanostructure may be arranged in a direction parallel to the surface of the negative electrode current collector 21. The first protective layer 23, 23a, or 23b may include, for example, graphene. The first protective layer 23, 23a, or 23b may include graphene arranged in a direction parallel to the surface of the negative electrode current collector 21. The graphene may be arranged, for example, at an angle of -30° to 30°, -20° to 20°, -10° to 10°, or -5° to 5° with the surface of the negative electrode current collector 21. The contact between the solid electrolyte and the negative electrode current collector 21 may be inhibited more effectively because the second carbon-based nanostructure is arranged in a direction parallel to the surface of the negative electrode current collector 21 in the first protective layer 23, 23a, or 23b.

The first protective layer 23, 23a, or 23b may include, for example, the second carbon-based nanostructure arranged in a direction protruding from the surface of the negative electrode current collector 21. The second carbon-based nanostructures may be arranged in a direction protruding from the surface of the negative electrode current collector 21. The first protective layer 23, 23a, or 23b may include, for example, graphene. The first protective layer 23, 23a, or 23b may include graphene arranged in a direction protruding from the surface of the negative electrode current collector 21. The second carbon-based nanostructure may be arranged, for example, at an angle of 45° to 135°, 50° to 130°, 60° to 120°, 70° to 110°, or 80° to 100° with respect to the surface of the negative electrode current collector 21. The second carbon-based nanostructure may be arranged, for example, to be perpendicular to the surface of the negative electrode current collector 21. Because the second carbon-based nanostructures are arranged in the direction protruding from the surface of the negative electrode current collector 21 in the first protective layer 23, 23a, or 23b, electron conduction between the first negative electrode active material layer 22 and the negative electrode current collector 21 may be performed more easily. As a result, an increase in internal resistance in the all-solid-state secondary battery 1 may be inhibited more effectively.

The first protective layer 23, 23a, or 23b may have a structure in which the second carbon-based nanostructure is stacked in a thickness direction of the first protective layer 23, 23a, or 23b. In the first protective layer 23, 23a, or 23b, a plurality of second carbon-based nanostructures may be stacked along the thickness direction of the first protective layer 23, 23a, or 23b. The first protective layer 23, 23a, or 23b may include, for example, a plurality of layers of the second carbon-based nanostructure stacked in the thickness direction of the first protective layer 23, 23a, or 23b. Because the second carbon-based nanostructures are stacked in the thickness direction of the negative electrode current collector 21 in the first protective layer 23, 23a, or 23b, structural density and structural stability of the first protective layer 23, 23a, or 23b may further be improved. The second carbon-based nanostructure may be stacked, for example, in 2000 layers or fewer, in 1500 layers or fewer, in 1000 layers or fewer, in 500 layers or fewer, in 100 layers or fewer, in 70 layers or fewer, in 50 layers or fewer, or in 30 layers or fewer in the first protective layer 23, 23a, or 23b. The second carbon-based nanostructure may be stacked, for example, 1 layer to 100 layers, 5 layers to 70 layers, 10 layers to 50 layers, or 20 layers to 30 layers in the first protective layer 23, 23a, or 23b. The second carbon-based nanostructure may be stacked, for example, 1 layer to 2000 layers, 10 layers to 1000 layers, 100 layers to 1000 layers, 100 layers to 500 layers, or 100 layers to 300 layers in the first protective layer 23, 23a, or 23b. The second carbon-based nanostructure may be stacked, for example, 1 layer to 2000 layers, 10 layers to 2000 layers, 100 layers to 2000 layers, 500 layers to 2000 layers, or 1000 layers to 2000 layers in the first protective layer 23, 23a, or 23b. Because the number of stacked layers of the second carbon-based nanostructure is within the ranges above, structural stability of the first protective layer 23, 23a, or 23b may further be improved.

The first protective layer 23, 23a, or 23b may directly be disposed on one side of the negative electrode current collector 21. The first protective layer 23, 23a, or 23b may be inert to the solid electrolyte, for example, the sulfide-based solid electrolyte. Because the first protective layer 23, 23a, or 23b is directly disposed on one side of the negative electrode current collector 21, the contact between the negative electrode current collector 21 and the sulfide-based solid electrolyte may be blocked, and thus deterioration, such as corrosion, of the negative electrode current collector 21 may be prevented more effectively.

The first protective layer 23, 23a, or 23b may be disposed, for example, on one side of the negative electrode current collector 21 facing the solid electrolyte layer. The first protective layer 23, 23a, or 23b may also be disposed on the other side of the negative electrode current collector 21 opposing to the one side of the negative electrode current collector 21 and may also be disposed on side surfaces of the negative electrode current collector 21 between the one and the other sides. Because the first protective layer 23, 23a, or 23b convers the negative electrode current collector 21 in part or in whole, deterioration caused by the sulfide-based solid electrolyte may more effectively be inhibited. Therefore, lifespan characteristics of the all-solid-state secondary battery 1 including the first protective layer 23, 23a, or 23b may be improved.

The thickness of the first protective layer 23, 23a, or 23b may be, for example, 5 µm or less, 3 µm or less, 2 µm or less, 1.5 µm or less, 1 µm or less, 500 nm or less, 300 nm or less, or 100 nm or less. The thickness of the first protective layer 23, 23a, or 23b may be, for example, at least a thickness of a single graphene layer, 1 nm or more, 10 nm or more, 20 nm or more, 50 nm or more, or 100 nm or more. The thickness of the first protective layer 23, 23a, or 23b may be, for example, the thickness of the single graphene layer to 2 µm, 10 nm to 1.5 µm, 50 nm to 1 µm, 100 nm to 900 nm, 200 nm to 800 nm, or 300 nm to 700 nm. The thickness of the first protective layer 23, 23a, or 23b may be, for example, the thickness of the single graphene layer to 2 µm, 1 nm to 1.5 µm, 5 nm to 1 µm, 10 nm to 500 nm, 20 nm to 300 nm, or 20 nm to 100 nm. If the first protective layer 23, 23a, or 23b is too thick, the all-solid-state secondary battery may have increased internal resistance and decreased energy density. If the first protective layer 23, 23a, or 23b is too thin, it may be difficult to effectively prevent side reactions between the negative electrode current collector 21 and the solid electrolyte.

The first protective layer 23, 23a, or 23b may be binder-free. The first protective layer 23, 23a, or 23b may not include a binder because the first protective layer 23, 23a, or 23b is formed by a dry method. Because the first protective layer 23, 23a, or 23b does not include a binder, the first protective layer 23, 23a, or 23b may have improved electronic conductivity and reduced internal resistance. Therefore, cycle characteristics, such as high rate characteristics of the all-solid-state secondary battery 1 including the first protective layer 23, 23a, or 23b may be improved. The first protective layer 23, 23a, or 23b may be prepared by a dry method such as CVD and PVD. The dry method used to form the first protective layer 23, 23a, or 23b is not particularly limited and any dry methods without using a binder commonly used in the art may also be used. The first protective layer 23, 23a, or 23b may be formed of, for example, the second carbon-based nanostructure and may not include a binder. The first protective layer 23, 23a, or 23b may be formed of, for example, graphene, and may not include a binder.

By disposing the first protective layer 23, 23a, or 23b, the interfacial resistance between the negative electrode current collector 21 and the first negative electrode active material layer 22 may be reduced. Therefore, the internal resistance of the all-solid-state secondary battery including the negative electrolyte layer 20 is reduced, resulting in improvement of cyclic characteristics of the all-solid-state secondary battery 1.

In addition, by disposing the first protective layer 23, 23a, or 23b, heat may be dissipated from the negative electrode current collector 21 more effectively. Because the first protective layer 23, 23a, or 23b includes the carbon-based material, the carbon-based material serves as a heat dissipation plate, and heat generated from the negative electrode current collector 21 during charging and discharging of the all-solid-state secondary battery 1 may be dissipated to the outside of the all-solid-state secondary battery 1 more effectively. Therefore, local thermal runway caused during a charging and discharging process of the all-solid-state secondary battery 1 may be prevented more effectively.

### [Negative Electrode Layer: Negative Electrode Current Collector]

The specific heat capacity of the negative electrode current collector 21 is, for example, 450 J/Kg·K or more, 460 J/Kg·K or more, 480 J/Kg·K or more, or 490 J/Kg·K or more. The specific heat capacity of the negative electrode current collector 21 is, for example, 450 to 700 J/Kg·K, 460 to 650 J/Kg·K, 480 to 600 J/Kg·K or 490 to 550 J/Kg·K. Such a high specific heat capacity of the negative electrode current collector may effectively reduce local changes in temperature in the negative electrolyte layer. Therefore, deterioration of the all-solid-state secondary battery 1 caused by local changes in temperature may be effectively prevented. The negative electrode current collector 21 is composed of, for example, a material does not react with lithium, i.e., a material that forms neither an alloy nor a compound with lithium. The material constituting the negative electrode current collector 21, for example, stainless steel (SUS), titanium (Ti), iron (Fe), and nickel (Ni), but is not limited thereto, and any materials having a specific heat capacity of 450 J/Kg·K and commonly available in the art as electrode current collectors may also be used. The material constituting the negative electrode current collector 21 is, particularly, stainless steel (SUS). The stainless steel is, for example, SUS316, SUS301, SUS304, or SUS430, but is not limited thereto.

The negative electrode current collector 21 may be formed of one metal selected from those described above or an alloy or coating material of two or more metals selected therefrom. The negative electrode current collector 21 may be, for example, in the form of a plate or foil.

The negative electrode current collector 21 may further include, for example, a thin film including elements capable of forming an alloy with lithium on the negative electrode current collector 21. The thin film is disposed between the negative electrode current collector 21 and the first negative electrode active material layer 22. The thin film may include, for example, an element capable of forming an alloy with lithium. The element capable of forming an alloy with lithium is gold, silver, zinc, tin, indium, silicon, aluminum, and bismuth, but is not limited thereto, and any elements capable of forming an alloy with lithium well known in the art may also be used. The thin film is formed of any one of the metals or an alloy of various types of metals. By disposing the thin film on a surface of the negative electrode current collector 21, the second negative electrode active material layer plated between the thin film 24 and the first negative electrode active material layer 22 may become flatter, thereby further improving cycle characteristics of the all-solid-state secondary battery 1. The thin film may be disposed between the first protective layer 23 and the first negative electrode active material layer 22 or between the first protective layer 23 and the negative electrode current collector 21.

A thickness of the thin film is, for example, 1 nm to 800 nm, 10 nm to 500 nm, or 50 nm to 100 nm. If the thickness of the thin film is less than 1 nm, the function of the thin film may be difficult to obtain. If the thin film is too thick, the thin film may irreversibly absorb lithium and thus an amount of plated lithium may be reduced in the negative electrode layer 20. As a result, substantial energy density of the all-solid-state secondary battery 1 may decrease and cycle characteristics of the all-solid-state secondary battery 1 may deteriorate. The thin film may be disposed on the negative electrode current collector 21, for example, by vacuum deposition, sputtering, or plating, but the method is not limited thereto, and any method enabling formation of a thin film and commonly used in the art may also be used.

### [Negative Electrode Layer: Second Negative Electrode Active Material Layer]

Although not shown in the drawings, the all-solid-state secondary battery 1 may further include, for example, a second negative electrode active material layer disposed between the solid electrolyte layer 30 and the negative electrode current collector 21 by charging. The second negative electrode active material layer may be disposed, for example, at one or more positions between the first negative electrode active material layer 22 and the first protective layer 23, 23a, or 23b and between the first negative electrode active material layer 22 and the solid electrolyte layer 30. The all-solid-state secondary battery 1 may further include, for example, the second negative electrode active material layer disposed between the first negative electrode active material layer 22 and the first protective layer 23, 23a, or 23b. The all-solid-state secondary battery 1 may further include, for example, the second negative electrode active material layer disposed between the first negative electrode active material layer 22 and the solid electrolyte layer 30. The second negative electrode active material layer is plated between the first negative electrode active material layer 22 and the first protective layer 23, 23a, or 23b during a charging process of the all-solid-state secondary battery 1.

The second negative electrode active material layer is a metal layer including lithium or a lithium alloy. The metal layer includes lithium or a lithium alloy. Therefore, the second negative electrode active material layer, as a metal layer including lithium, serves as a reservoir of lithium. The lithium alloy is, for example, an Li-Al alloy, an Li-Sn alloy, an Li-In alloy, an Li-Ag alloy, an Li-Au alloy, an Li-Zn alloy, an Li-Ge alloy, or an Li-Si alloy, but is not limited thereto, and any lithium alloys commonly available in the art may also be used. The second negative electrode active material layer is formed of one of the alloys alone, lithium, or any combination of various types of alloys. The second negative electrode active material layer is, for example, a plated layer.

A thickness of the second negative electrode active material layer is not particularly limited, but is, for example, 1 µm to 200 µm, 1 µm to 150 µm, 1 µm to 100 µm, or 1 µm to 50 µm. If the second negative electrode active material layer is too thin, the function of the second negative electrode active material layer as a reservoir of lithium is difficult to obtain. If the second negative electrode active material layer is too thick, the mass and volume of the all-solid-state secondary battery 1 may increase, and cycle characteristics of the all-solid-state secondary battery 1 may deteriorate. The second negative electrode active material layer may be, for example, a metal foil having a thickness within the ranges described above.

In the all-solid-state secondary battery 1, the second negative electrode active material layer is, for example, disposed between the negative electrode current collector 21 and the solid electrolyte layer 30 before assembling the all-solid-state secondary battery 1 or plated between the negative electrode current collector 21 and the solid electrolyte layer 30 after assembling and charging the all-solid-state secondary battery 1. In the all-solid-state secondary battery 1 including the second negative electrode active material layer disposed between the negative electrode current collector 21 and the solid electrolyte layer 30 before assembling the all-solid-state secondary battery 1, the second negative electrode active material layer, as a metal layer including lithium, serves as a lithium reservoir. For example, a lithium foil is disposed between the negative electrode current collector 21 and the solid electrolyte layer 30 before assembling the all-solid-state secondary battery 1. As a result, cycle characteristics of the all-solid-state secondary battery 1 including the second negative electrode active material layer are further improved. In the all-solid-state secondary battery 1 including the second negative electrode active material layer plated by charging, energy density of the all-solid-state secondary battery 1 increases because the second negative electrode active material layer is not included while the all-solid-state secondary battery is assembled. For example, while the all-solid-state secondary battery 1 is charged, charging is performed to exceed a charging capacity of the first negative electrode active material layer 22. That is, the first negative electrode active material layer 22 is overcharged. During initial charging, lithium is absorbed to the first negative electrode active material layer 22. The negative electrode active material included in the first negative electrode active material layer 22 forms an alloy or compound with lithium ions that have migrated from the positive electrode layer 10. If the first negative electrode active material layer 22 is overcharged to exceed the capacity thereof, lithium is plated, for example, on a front surface and/or a rear surface of the first negative electrode active material layer 22, i.e., between the first negative electrode active material layer 22 and the first protective layer 23, 23a, or 23b and/or between the first negative electrode active material layer 22 and the solid electrolyte layer 30, and a metal layer corresponding to the second negative electrode active material layer is formed by the plated lithium. The second negative electrode active material layer is a metal layer mainly composed of lithium (i.e., lithium metal). These results are obtained because the negative electrode active material included in the first negative electrode active material layer 22 includes a material forming an alloy or compound with lithium. During discharging, lithium of the first negative electrode active material layer 22 and the second negative electrode active material layer, i.e., the metal layer, is ionized to migrate in a direction toward the positive electrode layer 10. Therefore, lithium may be used as a negative electrode active material in the all-solid-state secondary battery 1. In addition, if the first negative electrode active material layer 22 is disposed between the solid electrolyte layer 30 and the second negative electrode active material layer, the first negative electrode active material layer 22 covers the second negative electrode active material layer, acting as a protective layer of the second negative electrode active material layer, i.e., metal layer, and inhibiting the growth of lithium dendrite. Therefore, a short circuit and capacity reduction are inhibited in the all-solid-state secondary battery 1, and thus cycle characteristics of the all-solid-state secondary battery 1 are improved. In addition, if the second negative electrode active material layer is disposed by charging after assembling the all-solid-state secondary battery 1, a region between the negative electrode current collector 21 and the solid electrolyte layer 30 is a Li-free region not including lithium (Li) in the early stage of charging or after discharging the all-solid-state secondary battery.

### [Solid Electrolyte Layer]

### [Solid Electrolyte Layer: Sulfide-based Solid Electrolyte]

Referring to FIGS. 1 to 5, the solid electrolyte layer 30 is disposed between the positive electrode layer 10 and the negative electrode layer 20. The solid electrolyte layer 30 includes a sulfide-based solid electrolyte.

The sulfide-based solid electrolyte included in the solid electrolyte layer 30 includes, for example, at least one selected from Li₂S-P₂S₅, Li₂S-P₂S₅-LiX, wherein X is a halogen atom, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ, wherein m and n are positive numbers and Z is Ge, Zn, or Ga, Li₂S-GeS₂, Li₂S-SiS₂-Li₃PO₄, Li₂S-SiS₂-LiₚMO_{q}, wherein p and q are positive numbers and M is P, Si, Ge, B, Al, Ga, or In, Li₃PS₄, Li₇P₃S₁₁, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. The sulfide-based solid electrolyte is prepared by treating a starting material such as Li₂S and P₂S₅ by melt quenching, mechanical milling, or the like. In addition, heat treatment may be performed after such treatment. The solid electrolyte may be in an amorphous state, a crystalline state, or a mixed state thereof. In addition, the solid electrolyte may include, for example, sulfur (S), phosphorus (P), and lithium (Li) as components among materials for the above-described sulfide-based solid electrolyte. For example, the solid electrolyte may be a material including Li₂S-P₂S₅. If the material including Li₂S-P₂S₅ is used as the sulfide-based solid electrolyte material constituting the solid electrolyte, a mixing molar ratio of Li₂S to P₂S₅ is, for example, 50:50 to 90:10. The sulfide-based solid electrolyte may include, for example, an argyrodite type solid electrolyte represented by Formula A below.

Formula A Li⁺₁₂₋ₙ₋ₓAⁿ⁺X²⁻₆₋ₓY⁻ₓ

In Formula A, A is P, As, Ge, Ga, Sb, Si, Sn, Al, In, Ti, V, Nb, or Ta, X is S, Se, or Te, Y is Cl, Br, I, F, CN, OCN, SCN, or N₃, 1≤n≤5, and 0≤x≤2. The sulfide-based solid electrolyte may be an argyrodite-type compound including, for example, at least one selected from Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ,where 0≤x≤2. The sulfide-based solid electrolyte may be an argyrodite-type compound including, for example, at least one selected from Li₆PS₅Cl, Li₆PS₅Br, and Li₆PS₅I. A density of the argyrodite-type solid electrolyte may be 1.5 g/cc to 2.0 g/cc. Because the argyrodite-type solid electrolyte has a density of 1.5 g/cc or more, internal resistance of the all-solid-state secondary battery may be reduced and penetration of the solid electrolyte layer by Li may be effectively inhibited.

A Young's modulus of the sulfide-based solid electrolyte may be, for example, 40 GPa or less. The Young's modulus of the sulfide-based solid electrolyte may be, for example, 5 GPa to 40 GPa, 10 GPa to 40 GPa, or 15 GPa to 30 GPa.

An average particle diameter of the sulfide-based solid electrolyte included in the solid electrolyte layer 30 may be, for example, 1 µm to 50 µm, 3 µm to 30 µm, or 3 µm to 20 µm. Because the sulfide-based solid electrolyte particles have an average particle diameter within the above-described ranges, cycle characteristics of the all-solid-state secondary battery may further be improved.

### [Solid Electrolyte Layer: Binder]

For example, the solid electrolyte layer 30 may further include a binder. The binder included in the solid electrolyte layer 30 is, for example, styrene butadiene rubber (SBR), polytetrafluoroethylene, polyvinylidene fluoride, or polyethylene, but is not limited thereto, and any binders commonly available in the art may also be used. The binder of the solid electrolyte layer 30 may be selected from binders included in the positive electrode active material layer 12. The binder may be omitted.

The binder included in the solid electrolyte layer may include, for example, a conductive binder and/or a non-conductive binder. The conductive binder may be, for example, an ion-conductive binder and/or an electron-conductive binder. A binder having both ionic conductivity and electronic conductivity may belong to both the ion-conductive binder and the electron-conductive binder. For the conductive binder, refer to the above-described first protective layer 23, 23a, or 23b.

The binder included in the solid electrolyte layer 30 may include, for example, a first binder. The first binder is, for example, a dry binder. The dry binder is, for example, a binder not impregnated, dissolved, or dispersed in a solvent. The dry binder is, for example, a binder not including a solvent or not in contact with a solvent.

The first binder is, for example, a fibrillized binder. The fibrillized binder may act as a matrix in the form of fibers binding a plurality of sulfide-based solid electrolyte particles and inorganic particles included in the solid electrolyte layer while supporting the same. It may be confirmed that the fibrillized binder has a fibrous form based on an SEM image of a cross-section of the electrode. The fibrillized binder may have an aspect ratio of, for example, 10 or more, 20 or more, 50 or more, or 100 or more. The first binder is, for example, polytetrafluoroethylene (PTFE) or a polyvinylidene fluoride-hexafluoropropylene (PVDF-HFP) copolymer, but is not limited thereto, and any fibrillized binders used to prepare a dry composition may also be used. For example, the first dry binder may include a fluorine-based binder. The fluorine-based binder is, for example, polytetrafluoroethylene (PTFE).

The binder included in the solid electrolyte layer 30 may further include, for example, a second binder. The second binder is, for example, a dry binder. Descriptions of the dry binder are the same as those given above in the first binder.

The second binder is, for example, a non-fibrillized binder. The non-fibrillized binder may serve as a site for binding of the sulfide-based solid electrolyte particles and inorganic particles included in the solid electrolyte layer while supporting the same. It may be confirmed that the non-fibrillized binder is in the form of particles, rather than in the form of fibers, based on a cross-sectional image of the electrode obtained by using a scanning electron microscope. The non-fibrillized binder may have, for example, an aspect ratio of 5 or less, 3 or less, or 2 or less. The second binder is, for example, polyvinylidene fluoride (PVDF), polyvinyl alcohol, polyacrylonitrile, carboxymethylcellulose (CMC), starch, hydroxypropylcellulose, cellulose, polyvinylpyrrolidone, polyethylene, polypropylene, ethylene-propylene-diene polymer (EPDM), sulfonated-EPDM, styrene butadiene rubber (SBR), fluororubber, or a copolymer thereof, but is not limited thereto, and any binders used in the manufacture of dry electrodes may also be used. The second binder may particularly include a fluorine-based binder. The fluorine-based binder is, for example, polyvinylidene fluoride (PVDF).

An amount of the binder included in the solid electrolyte layer 30 is, for example, 1 wt% to 10 wt%, 1 wt% to 5 wt%, or 1 wt% to 3 wt% based on a total weight of the solid electrolyte layer. Because the amount of the binder included in the solid electrolyte layer is within the ranges described above, binding strength of the solid electrolyte layer may be improved and the all-solid-state secondary battery may have an energy density maintained at a high level.

The solid electrolyte layer 30 is, for example, a self-standing film. For example, the solid electrolyte layer may have a film shape without using a support. Therefore, the solid electrolyte layer may be prepared as a separate self-standing film and then disposed between the positive electrode layer and the negative electrode layer. The solid electrolyte layer may be, for example, residual processing solvent-free. For example, the solid electrolyte layer does not include a processing solvent intentionally added thereto because the solid electrolyte layer is prepared by a dry method. For example, the solid electrolyte layer does not include a residual processing solvent. A trace amount of a unintended solvent may remain in the solid electrolyte layer, but the solvent is not an intentionally added processing solvent. Therefore, the solid electrolyte layer is distinguished from a wet solid electrolyte layer prepared by mixing sulfide-based solid electrolyte particles with a processing solvent, and drying the mixture to remove the processing solvent in part or in whole.

### [Positive Electrode Layer]

### [Positive Electrode Layer: Positive Electrode Active Material]

Referring to FIGS. 1 to 5, the positive electrode active material layer 12 may include, for example, a positive electrode active material and a solid electrolyte. The solid electrolyte included in the positive electrode active material layer 12 may be selected from the solid electrolytes included in the solid electrolyte layer 30. For detailed descriptions of the solid electrolyte, refer to descriptions of the solid electrolyte layer 30. The solid electrolyte may be omitted.

The positive electrode active material included in the positive electrode active material layer 12 is a positive electrode active material capable of reversibly absorbing and desorbing lithium ions. The positive electrode active material includes, for example, an oxide-based positive electrode active material, a sulfide-based positive electrode active material, or any combination thereof.

The oxide-based positive electrode active material includes, for example, a lithium transition metal oxide, a metal oxide, or any combination thereof. The lithium transition metal oxide includes, for example, a lithium cobalt oxide, a lithium nickel oxide, a lithium nickel cobalt oxide, a lithium nickel cobalt aluminum oxide, a lithium nickel cobalt manganese oxide, a lithium manganate, a lithium iron phosphate, or any combination thereof. The lithium oxide includes, for example, an iron oxide, a vanadium oxide, or any combination thereof.

The sulfide-based positive electrode active material includes, for example, nickel sulfide, copper sulfide, Li₂S, a Li₂S-containing composite, or any combination thereof.

The oxide-based positive electrode active material includes, for example, at least one composite oxide of lithium and a metal selected from cobalt, manganese, nickel, and any combination thereof. The oxide-based positive electrode active material may include, for example, a compound represented by one of the following formulae: LiₐA_{1-b}B'_{b}D₂ (wherein 0.90≤a≤1 and 0≤b≤0.5); LiₐE_{1-b}B'_{b}O_{2-c}D_{c} (wherein 0.90≤a≤1, 0≤b≤0.5, and 0≤c≤0.05); LiE_{2-b}B'_{b}O_{4-c}D_{c} (wherein 0≤b≤0.5 and 0≤c≤0.05); LiₐNi_{1-b-c}Co_{b}B'_{c}D_{α} (wherein 0.90≤a≤1, 0≤b≤0.5, 0≤c≤0.05, and 0<α≤2); LiaNi_{1-b-c}Co_{b}B'_{c}O_{2-α}F'_{α} (wherein 0.90≤a≤1, 0≤b≤0.5, 0≤c≤0.05, and 0<α<2); LiₐNi_{1-b-c}Co_{b}B'_{c}O₂ (wherein 0.90≤a≤1, 0≤b≤0.5, and 0≤c≤0.05); LiaNi_{1-b-c}Mn_{b}B'_{c}D_{α} (wherein 0.90≤a≤1, 0≤b≤0.5, 0≤c≤0.05, and 0<α≤2); LiaNi_{1-b-c}Mn_{b}B'_{c}O_{2-α}F'_{α} (wherein 0.90≤a≤1, 0≤b≤0.5, 0≤c≤0.05, and 0<α<2); LiₐNi_{1-b-c}Mn_{b}B'_{c}O₂ (wherein 0.90≤a≤1, 0≤b≤0.5, and 0≤c≤0.05); LiₐNi_{b}E_{c}G_{d}O₂ (wherein 0.90≤a≤1, 0≤b≤0.9, 0≤c≤0.5, and 0.001≤d≤0.1); LiₐNi_{b}Co_{c}Mn_{d}GeO₂ (wherein 0.90≤a≤1, 0≤b≤0.9, 0≤c≤0.5, 0≤d≤0.5 and 0.001≤e≤0.1); LiₐNiG_{b}O₂ (wherein 0.90≤a≤1 and 0.001≤b≤0.1); LiₐCoG_{b}O₂ (wherein 0.90≤a≤1 and 0.001≤b≤0.1); LiₐMnG_{b}O₂ (wherein 0.90≤a≤1 and 0.001≤b≤0.1); LiₐMn₂G_{b}O₄ (wherein 0.90≤a≤1 and 0.001≤b≤0.1); LiV₂O₅; LiI'O₂; LiNiVO₄; Li_{(3-f)}J₂(PO₄)₃ (wherein 0≤f≤2); Li_{(3-f)}Fe₂(PO₄)₃ (wherein 0≤f≤2); and LiFePO₄.

In the formulae representing the compounds above, A is Ni, Co, Mn, or any combination thereof; B' is Al, Ni, Co, Mn, Cr, Fe, Mg, Sr, V, a rare earth element, or any combination thereof; D is O, F, S, P, or any combination thereof; E is Co, Mn, or any combination thereof; F' is F, S, P, or any combination thereof; G is Al, Cr, Mn, Fe, Mg, La, Ce, Sr, V, or any combination thereof; Q is Ti, Mo, Mn, or any combination thereof; I' is Cr, V, Fe, Sc, Y, or any combination thereof; and J is V, Cr, Mn, Co, Ni, Cu, or any combination thereof. The above-described compound having a coating layer on the surface thereof may also be used or a mixture of the above-described compound and a compound having a coating layer may also be used. The coating layer added to the surface of the compound includes, for example, a compound of a coating element such as an oxide, hydroxide, oxyhydroxide, oxycarbonate, or hydroxycarbonate of the coating element. The compound constituting the coating layer is amorphous or crystalline. The coating element included in the coating layer is Mg, Al, Co, K, Na, Ca, Si, Ti, V, Sn, Ge, Ga, B, As, Zr, or any mixture thereof. A method of forming the coating layer is selected from those not adversely affecting physical properties of the positive electrode active material. The coating method is, for example, spray coating and dip coating. These methods may be obvious to those of ordinary skill in the art, and thus detailed descriptions thereof will be omitted.

The oxide-based positive electrode active material may include, for example, a lithium transition metal oxide represented by one of Formulae 1 to 8 below.

<Formula 1> LiₐNiₓCo_{y}M_{z}O_{2-b}A_{b}

In Formula 1,
1.0≤a≤1.2, 0≤b≤0.2, 0.8≤x<1, 0≤y≤0.3, 0<z≤0.3, and x+y+z=1,
M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and
A is F, S, Cl, Br, or any combination thereof.

   <Formula 2> LiNiₓCo_{y}Mn_{z}O₂

   <Formula 3> LiNiₓCo_{y}Al_{z}O₂

In Formulae 2 and 3, 0.8≤x≤0.95, 0≤y≤0.2, 0<z≤0.2, and x+y+z=1. <Formula 4> LiNiₓCo_{y}Mn_{z}Al_{w}O₂

In Formula 4, 0.8≤x≤0.95, 0≤y≤0.2, 0<z≤0.2, 0<w≤0.2, and x+y+z+w=1.

<Formula 5> LiaCoxMyO2-bAb

In Formula 5, 1.0≤a≤1.2, 0≤b≤0.2, 0.9≤x≤1, 0≤y≤0.1, and x+y=1,

M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and

A is F, S, Cl, Br, or any combination thereof.

<Formula 6> LiₐNiₓMn_{y}M'_{z}O_{2-b}A_{b}

In Formula 6,
1.0≤a≤1.2, 0≤b≤0.2, 0<x≤0.3, 0.5≤y<1, 0<z≤0.3, and x+y+z=1,
M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or any combination thereof, and
A is F, S, Cl, Br, or any combination thereof.

   <Formula 7> LiₐM1ₓM2_{y}PO_{4-b}X_{b}

In Formula 7, 0.90≤a≤1.1, 0≤x≤0.9, 0≤y≤0.5, 0.9<x+y<1.1, and 0≤b≤2 ,
M1 is chromium (Cr), manganese (Mn), iron (Fe), cobalt (Co), nickel (Ni), copper (Cu), zirconium (Zr), or any combination thereof, and
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or any combination thereof, and X is O, F, S, P or any combination thereof.

   <Formula 8> LiₐM3_{z}PO₄

In Formula 8, 0.90≤a≤1.1 and 0.9≤z≤1.1, and
M3 is chromium (Cr), manganese (Mn), iron (Fe), cobalt (Co), nickel (Ni), copper (Cu), zirconium (Zr), or any combination thereof.

The oxide-based positive electrode active material may be covered with a coating layer. The coating layer may be formed of any material commonly used for coating layers of positive electrode active materials of all-solid-state secondary batteries. The coating layer is formed of, for example, Li₂O-ZrO₂ (LZO).

The sulfide-based positive electrode active material may include, for example, a Li₂S-containing composite. The Li₂S-containing composite includes, for example, a composite of Li₂S and carbon, a composite of Li₂S, carbon, and a solid electrolyte, a composite of Li₂S and a solid electrolyte, a composite of Li₂S and a metal carbide, a composite of Li₂S, carbon, and a metal carbide, a composite of Li₂S and a metal nitride, a composite of Li₂S, carbon, and a metal nitride, a composite of Li₂S and a metal, a composite of Li₂S, a metal, and carbon, or any combination thereof.

The composite of Li₂S and carbon includes carbon. The carbon may be, for example, any material including carbon atoms and commonly available as conductive materials in the art. The carbon may be, for example, crystalline carbon, amorphous carbon, or any combination thereof. The carbon may be, for example, a calcined product of a carbon precursor. The carbon may be, for example, a carbon-based nanostructure. The carbon-based nanostructure may be, for example, a one-dimensional carbon-based nanostructure, a two-dimensional carbon-based nanostructure, a three-dimensional carbon-based nanostructure, or any combination thereof. The carbon-based nanostructure may be, for example, carbon nanotube, carbon nanofiber, carbon nanobelt, carbon nanorod, graphene, graphene oxide (GO), reduced graphene oxide (rGO), graphene ball (GB), or any combination thereof. The carbon may be, for example, porous carbon or non-porous carbon. The porous carbon may have, for example, periodic and regular two-dimensional or three-dimensional pores. The porous carbon may be, for example, carbon black such as Ketjen black, acetylene black, Denka black, thermal black, and channel black; graphite, activated carbon, or any combination thereof. The carbon may be, for example, in a particle form, a sheet form, or a flake form, but is not limited thereto, any material commonly available in the art as carbon may also be used. A method of manufacturing the composite of Li₂S and carbon may be a dry method, a wet method, any combination thereof, but is not limited thereto, and any methods commonly available in the art to manufacture the composite of Li₂S and carbon, such as milling, heat treatment, and deposition may also be used.

The composite of Li₂S, carbon, and a solid electrolyte may include carbon and a solid electrolyte. For descriptions of carbon, refer to the above-described composite of Li₂S and carbon. The solid electrolyte may be any solid electrolytes commonly available in the art as an ion-conductive material. The solid electrolyte is, for example, an inorganic solid electrolyte. The solid electrolyte is, for example, a crystalline solid electrolyte, an amorphous solid electrolyte, or any combination thereof. The solid electrolyte is, for example, a sulfide-based solid electrolyte, an oxide-based solid electrolyte, a lithium salt compound, or any combination thereof. The sulfide-based solid electrolyte may include, for example, Li, S and P, and may further include a halogen element, optionally. The sulfide-based solid electrolyte may be selected from sulfide-based solid electrolytes used in the solid electrolyte layer. The sulfide-based solid electrolyte may have an ionic conductivity of, for example, 1×10⁻⁵ S/cm or more at room temperature. The sulfide-based solid electrolyte may include, for example, at least one selected from Li₃PO₄-Li₂SO₄, Li₂S-P₂S₅, Li₂S-P₂S₅-LiX, wherein X is a halogen atom, Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-Lil, Li₂S-B₂S₃, Li₂S-P₂S₅-ZₘSₙ, wherein m and n are positive numbers, and Z is Ge, Zn, or Ga, Li₂S-GeS₂, Li₂S-SiS₂-Li₃PO₄, Li₂S-SiS₂-LiₚMO_{q}, wherein p and q are positive numbers and M is P, Si, Ge, B, Al, Ga, or In, Li₇₋ₓPS₆₋ₓClₓ, wherein 0≤x≤2, Li₇₋ₓPS₆₋ₓBrₓ, wherein 0≤x≤2, and Li₇₋ₓPS₆₋ₓIₓ, wherein 0≤x≤2. The oxide-based solid electrolyte may include, for example, Li, O, and a transition metal element, and may optionally further include another element. The oxide-based solid electrolyte may be, for example, a solid electrolyte having an ionic conductivity of 1×10⁻⁵ S/cm or more at room temperature. The oxide-based solid electrolyte may be selected from oxide-based solid electrolytes used in the solid electrolyte layer. The lithium salt compound is, for example, an inorganic compound. The solid electrolyte includes, for example, a lithium salt compound, and the lithium salt compound does not include a sulfur (S) atom. The lithium salt compound may be, for example, a binary compound consisting of lithium and one element selected from Groups 13 to 17 of the periodic table. The binary compound may include, for example, at least one selected from LiF, LiCl, LiBr, Lil, LiH, Li₂S, Li₂O, Li₂Se, Li₂Te, Li₃N, Li₃P, Li₃As, Li₃Sb, Li₃, and LiB₃. The lithium salt compound may be, for example, a ternary compound consisting of lithium and two elements selected from Groups 13 to 17 of the periodic table. The ternary compound may include, for example, at least one selected from Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, and Li₃BN₂. The lithium salt compound is particularly at least one lithium halide compound selected from LiF, LiCl, LiBr, and Lil. The solid electrolyte may be, for example, a mixture of a sulfide-based solid electrolyte and a lithium salt compound. For example, the solid electrolyte may be a mixture of Li₃PO₄-Li₂SO₄ and a binary lithium salt compound or a mixture of Li₃PO₄-Li₂SO₄ and a ternary lithium salt compound.

The composite of Li₂S and a solid electrolyte includes a solid electrolyte. For descriptions of the solid electrolyte, refer to the above-described solid electrolyte used in the composite of Li₂S, carbon, and the solid electrolyte. The composite of Li₂S and the solid electrolyte includes, for example, a composite of Li₂S and at least one lithium salt selected from LiF, LiCl, LiBr, Lil, LiH, Li₂S, Li₂O, Li₂Se, Li₂Te, Li₃N, Li₃P, Li₃As, Li₃Sb, Li₃, and LiB₃.

The composite of Li₂S and a metal carbide includes a metal carbide. The metal carbide is, for example, a two-dimensional metal carbide. The two-dimensional metal carbide is, for example, MXene. The two-dimensional metal carbide is represented by, for example, Mₙ₊₁CₙTₓ (wherein M is a transition metal, T is a terminal group, T is O, OH, and/or F, n=1, 2, or 3, and x is a number of terminal groups). The two-dimensional metal carbide is, for example, Ti₂CTₓ, (Ti_{0.5}, Nb_{0.5})₂CTₓ, Nb₂CTₓ, V₂CTₓ, Ti₃C₂Tₓ, (V_{0.5}, Cr_{0.5})₃C₂Tₓ, Ti₃CNTₓ, Ta₄C₃Tₓ, Nb₄C₃Tₓ, or any combination thereof. The surface of the two-dimensional metal carbide is terminated with O, OH, and/or F.

The composite of Li₂S, carbon, and a metal carbide includes carbon and a metal carbide. For descriptions of carbon, refer to the above-described composite of Li₂S and carbon. For descriptions of the metal carbide, refer to the above-described composite of Li₂S and a metal carbide.

The composite of Li₂S and a metal nitride includes a metal nitride. The metal nitride is, for example, a two-dimensional metal nitride. The two-dimensional metal nitride is represented by, for example, Mₙ₊₁NₙTₓ (wherein M is a transition metal, T is a terminal group, T is O, OH, and/or F, n=1, 2, or 3, and x is a number of terminal groups). The surface of the two-dimensional metal nitride is terminated with O, OH, and/or F.

The composite of Li₂S, carbon, and a metal nitride includes carbon and a metal nitride. For descriptions of carbon, refer to the above-described composite of Li₂S and carbon. For descriptions of the metal nitride, refer to the above-described composite of Li₂S and a metal nitride.

The positive electrode active material has a particle shape, such as, a spherical shape or an elliptically spherical shape. A particle diameter of the positive electrode active material is not particularly limited but is within a range applicable to the positive electrode active material of conventional all-solid-state secondary batteries. The an amount of the positive electrode active material of the positive electrode 10 is not particularly limited but is within a range applicable to positive electrodes of conventional all-solid-state secondary batteries. An amount of the positive electrode active material included in the positive electrode active material layer 12 may be, for example, 10 wt% to 99 wt%, 10 wt% to 90 wt%, 10 wt% to 80 wt%, 10 wt% to 70 wt%, or 10 wt% to 50 wt% based on a total weight of the positive electrode active material layer 12.

### [Positive Electrode Layer: Solid Electrolyte]

The positive electrode active material layer 12 may further include, for example, a solid electrolyte. The positive electrode active material layer 12 may include an oxide-based solid electrolyte or a sulfide-based solid electrolyte.

The solid electrolyte included in the positive electrode active material layer 12 may be a sulfide-based solid electrolyte. For detailed descriptions of the sulfide-based solid electrolyte, refer to descriptions of the solid electrolyte layer 30.

The solid electrolyte included in the positive electrode active material layer 12 may be an oxide-based solid electrolyte. The oxide-based solid electrolyte includes, for example, at least one selected from Li_{1+x+y}AlₓTi₂₋ₓSi_{y}P_{3-y}O₁₂ (wherein 0<x<2 and 0≤y<3), BaTiO₃, Pb(Zr,Ti)O₃ (PZT), Pb₁₋ₓLaₓZr_{1-y}Ti_{y}O₃ (PLZT, where 0≤x<1 and 0≤y<1), PB(Mg₃Nb_{2/3})O₃-PbTiO₃ (PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTiy(PO₄)₃(wherein 0<x<2 and 0<y<3), LiₓAl_{y}Ti_{z}(PO₄)₃ (wherein 0<x<2, 0<y<1, and 0<z<3), Li_{1+x+y}(Al, Ga)ₓ(Ti, Ge)₂₋ₓSi_{y}P_{3-y}O₁₂ (wherein 0≤x≤1 and 0≤y≤1), LiₓLa_{y}TiO₃ (wherein 0<x<2 and 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂ (wherein M = Te, Nb, or Zr, and x is an integer from 1 to 10). The solid electrolyte is manufactured by a sintering method, or the like. For example, the oxide-based solid electrolyte is a garnet-type solid electrolyte selected from Li₇La₃Zr₂O₁₂ (LLZO) and Li₃₊ₓLa₃Zr₂₋ₐMₐO₁₂ (M doped LLZO, wherein M=Ga, W, Nb, Ta, or Al and x is an integer from 1 to 10).

The solid electrolyte included in the positive electrode active material layer 12 may have a smaller particle diameter than that of a solid electrolyte included in the solid electrolyte layer 30. For example, the particle diameter of the solid electrolyte included in the positive electrode active material layer 12 may be 90% or less, 80% or less, 70% or less, 60% or less, 50% or less, 40% or less, 30% or less, or 20% or less of the particle diameter of the solid electrolyte included in the solid electrolyte layer 30. The particle diameter of the solid electrolyte is, for example, a median particle diameter (D50). The median particle diameter D50 is a particle diameter corresponding to a 50 % cumulative volume calculated from the smallest particle in a particle size distribution measured, for example, by laser diffraction method.

### [Positive Electrode Layer: Binder]

The positive electrode active material layer 12 may include a binder. The binder is styrene butadiene rubber (SBR), polytetrafluoroethylene, polyvinylidene fluoride, or polyethylene, but is not limited thereto and any binders commonly available in the art may also be used.

### [Positive Electrode Layer: Conductive Material]

The positive electrode active material layer 12 may include a conductive material. The conductive material is, for example, graphite, carbon black, acetylene black, Ketjen black, carbon fiber, or metal powder, but is not limited thereto, and any conductive materials commonly available in the art may also be used.

### [Positive Electrode Layer: Other Additives]

The positive electrode active material layer 12 may further include, for example, a filler, a coating agent, a dispersant, and an ion-conductive adjuvant in addition to the positive electrode active material, the solid electrolyte, the binder, and the conductive material described above.

The filler, the coating agent, the dispersant, and the ion-conductive adjuvant included in the positive electrode active material layer 12 may be any known materials commonly used in electrodes of all-solid-state secondary batteries.

### [Positive Electrode Layer: Positive Electrode Current Collector]

The positive electrode current collector 11 is, for example, in the form of a plate or foil formed of indium (In), copper (Cu), magnesium (Mg), stainless steel (SUS), titanium (Ti), iron (Fe), cobalt (Co), nickel (Ni), zinc (Zn), aluminum (Al), germanium (Ge), lithium (Li), or an alloy thereof. The positive electrode current collector 11 may be omitted. A thickness of the positive electrode current collector 11 is, for example, 1 µm to 100 µm, 1 µm to 50 µm, 5 µm to 25 µm, or 10 µm to 20 µm.

Although not shown in the drawings, the positive electrode current collector 11 may include, for example, a base film and a metal layer disposed on one or both sides of the base film. The base film may include, for example, a polymer. The polymer may be, for example, a thermoplastic polymer. The polymer may include, for example, polyethyleneterephthalate (PET), polyethylene (PE), polypropylene (PP), polybutyleneterephthalate (PBT), polyimide (PI), or any combination thereof. Because the base film includes the thermoplastic polymer, the base film melts in the case of occurrence of a short circuit, thereby inhibiting a rapid increase in current. The base film may be, for example, an insulator. The metal layer may include, for example, indium (In), copper (Cu), magnesium (Mg), titanium (Ti), iron (Fe), cobalt (Co), nickel (Ni), zinc (Zn), aluminum (Al), germanium (Ge), or any alloy thereof. Particularly, the metal layer may include, for example, aluminum (Al), titanium (Ti), iron (Fe), cobalt (Co), nickel (Ni), or an alloy thereof. The metal layer may act as an electrochemical fuse to be cut in the case of an overcurrent, thereby preventing a short circuit. By controlling a thickness of the metal layer, a limiting current and a maximum current may be adjusted. The metal layer may be plated or deposited on the base film. As the thickness of the metal layer decreases, the limiting current and/or maximum current of the positive electrode current collector 11 decreases, so that stability of a lithium battery may be improved in the event of a short circuit. A lead tab may be added onto the metal layer for connection with the outside. The lead tab may be welded to the metal layer or a metal layer/base film stack structure by ultrasonic welding, laser welding, spot welding, and the like. While the base film and/or the metal layer melts during welding, the metal layer may be electrically connected to the lead tab. A metal chip may further be added between the metal layer and the lead tab for stronger welding between the metal layer and the lead tab. The metal chip may be a chip of the same material as the metal of the metal layer. The metal chip may be, for example, metal foil and metal mesh. The metal chip may be, for example, copper foil and nickel foil. By disposing the metal chip on the metal layer and performing welding with the lead tab, the lead tab may be welded to a metal chip/metal layer stack structure or a metal chip/metal layer/base film stack structure. While the base film, the metal layer, and/or the metal chip melt during welding, the metal layer or the metal layer/metal chip stack structure may be electrically connected to the lead tab. A metal chip and/or a lead tab may further be added to a portion of the metal layer. A thickness of the base film may be, for example, 1 to 50 µm, 1.5 to 50 µm, 1.5 to 40 µm, or 1 to 30 µm. Because the thickness of the base film is within the above-described ranges, a weight of an electrode assembly may be reduced more effectively. A melting point of the base film may be, for example, 100 to 300 °C, 100 to 250 °C, or 100 to 200 °C. Because the base film has a melting point within the above-described ranges, the base film may melt during a process of welding the lead tab to be easily bound to the lead tab. To improve adhesion between the base film and the metal layer, surface treatment such as corona treatment may be performed on the base film. A thickness of the metal layer may be, for example, 0.01 to 3 µm, 0.1 to 3 µm, 0.1 to 2 µm, or 0.1 to 1 µm. Because the thickness of the metal layer is within the above-described ranges, stability of the electrode assembly may be obtained while maintaining conductivity thereof. A thickness of the metal chip may be, for example, 2 to 10 µm, 2 to 7 µm, or 4 to 6 µm. Because the metal chip has a thickness within the above-described ranges, the metal layer may be connected to the lead tab more easily. Because the positive electrode current collector 11 has the above-described structure, the weight of the positive electrode may be reduced, so that energy density of the all-solid-state secondary battery may be increased.

### [Positive Electrode Layer: Inactive Member]

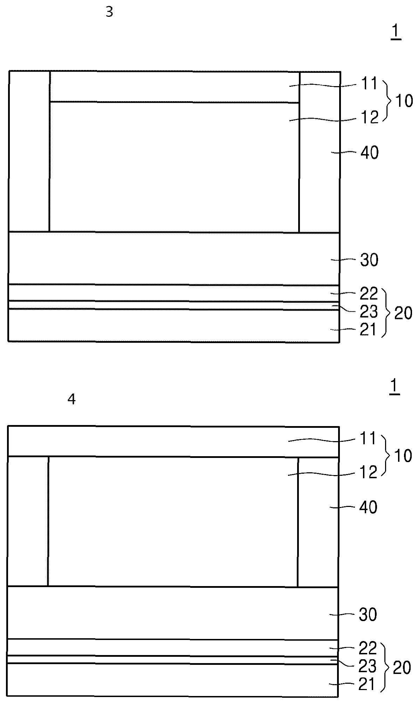

Referring to FIGS. 3 to 5, the positive electrode 10 includes a positive electrode current collector 11, and a positive electrode active material layer 12 disposed on one side of the positive electrode current collector 11, and further includes an inactive member 40, 40a, or 40b disposed on one side surface of the positive electrode layer 10.

By including the inactive member 40, cracks of the solid electrolyte layer 30 is prevented during a manufacturing process and/or a charging and discharging process of the all-solid-state secondary battery 1, resulting in improvement of cycle characteristics of the all-solid-state secondary battery 1. In an all-solid-state secondary battery 1 not including the inactive member 40, a pressure may non-uniformly be applied to the solid electrolyte layer 30 in contact with the positive electrode layer 10 to cause occurrence of cracks in the solid electrolyte layer 30 during manufacturing and/or charging and discharging of the all-solid-state secondary battery 1, and lithium metal may grow thereby increasing the possibility of a short circuit.

The inactive member 40 is arranged to surround the positive electrode layer along side surfaces of the positive electrode layer 10. The inactive member 40 is, for example, in contact with the solid electrolyte layer 30 in a state of surrounding a part of or the entire side surfaces the positive electrode layer 10. because the inactive member 40 is in contact with the solid electrolyte layer 30 in a state of surrounding side surfaces of the positive electrode layer 10, cracks, which are caused in the solid electrolyte layer 30 not in contact with the positive electrode layer 20 during a pressing process by a pressure difference, may be effectively inhibited. The inactive member 40 surrounds the side surfaces of the positive electrode 10 and is separated from the negative electrode 20, more p-specifically, from the first negative electrode active material layer 22. The inactive member 40 is in contact with the solid electrolyte layer 30 in a state of surrounding side surfaces of the positive electrode 10 and is separated from the negative electrode 20. Therefore, the possibility of a short circuit caused by physical contact between the positive electrode 10 and the first negative electrode active material layer 22 or the possibility of a short circuit caused by overcharging of lithium is inhibited. Referring to FIG. 3, because the inactive member 40 is disposed on one side surface of the positive electrode active material layer 12 as well as one side surface of the positive electrode current collector 11, the possibility of occurrence of a short circuit caused by contact between the positive electrode current collector 11 and the negative electrode 20 is inhibited more effectively. Alternatively, referring to FIG. 4, the inactive member 40 is disposed on one side surface of the positive electrode active material layer 12 and between the solid electrolyte layer 30 and the positive electrode current collector 11 facing the solid electrolyte layer 30. The inactive member 40 is not disposed on the side surface of the positive electrode current collector 11. By disposing the inactive member 40 between the positive electrode current collector 11 and the solid electrolyte layer 30, a short circuit caused by the contact between the positive electrode current collector 11 and the negative electrode 20 may effectively be prevented.

Although not shown in the drawings, a part of or the entire inactive member 40, 40a, or 40b may be arranged to be spaced apart from side surfaces of the positive electrode layer 10. Because a part of or the entire inactive member 40, 40a, or 40b is arranged to be spaced apart from side surfaces of the positive electrode layer 10, the manufacturing process of the all-solid-state secondary battery 1 may be performed more easily, and a manufacturing rate of the all-solid-state secondary battery 1 may be increased. Because a part of or the entire inactive member 40, 40a, or 40b is arranged to be spaced apart from side surfaces of the positive electrode layer 10, a volume change of the positive electrode layer 10 in the lateral direction may be absorbed more effectively during charging and discharging, and thus lifespan characteristics of the all-solid-state secondary battery 1 may further be improved. Distances between the inactive member 40, 40a, or 40b and the side surfaces of the positive electrode layer 10 is, each independently, for example, 0.1 µm to 10 mm, 1 µm to 1 mm, 1 µm to 500 µm, 1 µm to 100 µm, 1 µm to 50 µm, or 1 µm to 10 µm.

The inactive member 40 may further include a position determiner (not shown) configured to determine a position of the inactive member 40 on the solid electrolyte layer 30. Because the inactive member 40 includes the position determiner, the position where the inactive member 40 is located on the solid electrolyte layer 30 may be determined more easily. As a result, a manufacturing rate of the all-solid-state secondary battery 1 may be increased and ease of manufacture thereof may be improved.

Referring to FIGS. 3 and 4, the inactive member 40 extends from one side surface of the positive electrode layer 10 to an end portion of the solid electrolyte layer 30. By extending the inactive member 40 to the end portion of the solid electrolyte layer 30, cracks occurring in the end portion of the solid electrolyte layer 30 may be inhibited. The end portion of the solid electrolyte layer 30 is the outermost portion in contact with a side surface of the solid electrolyte layer 30. The inactive member 40 extends to the outermost portion in contact with the side surface of the solid electrolyte layer 30. The inactive member 40 is separated from the negative electrode layer 20, more specifically, from the first negative electrode active material layer 22. The inactive member 40 extends to the end portion of the solid electrolyte layer 30 but not in contact with the negative electrode layer 20. The inactive member 40 fills a space between one side surface of the positive electrode layer 10 and the end portion of the solid electrolyte layer 30.

The inactive member 40 may be, for example, a gasket. By using the gasket as the inactive member 40, cracks caused in the solid electrolyte layer 30 by a pressure difference during a pressing process may be inhibited more effectively.

The inactive member 40 has, for example, a single-layer structure. Alternatively, although not shown in the drawings, the inactive member 40 may have a multilayer structure. In the inactive member 40 having a multilayer structure, each layer may have a different composition. The inactive member having a multilayer structure may have a two-layer structure, a three-layer structure, a four-layer structure, or a five-layer structure. The inactive member 40 having a multilayer structure may include, for example, at least one adhesive layer and at least one support layer. The adhesive layer effectively prevents separation of the positive electrode layer 10 from the solid electrolyte layer 30 caused by a volume change of the positive electrode layer 10 during a charging and discharging process of the all-solid-state secondary battery 1 and may provide binding strength between the support layer and other layers to increase strength of a film of the inactive member 40. The support layer provides a supporting force to the inactive member 40, prevents non-uniform application of a pressure to the solid electrolyte layer 30 during a pressing process or a charging and discharging process, and prevents deformation of the all-solid-state secondary battery 1.

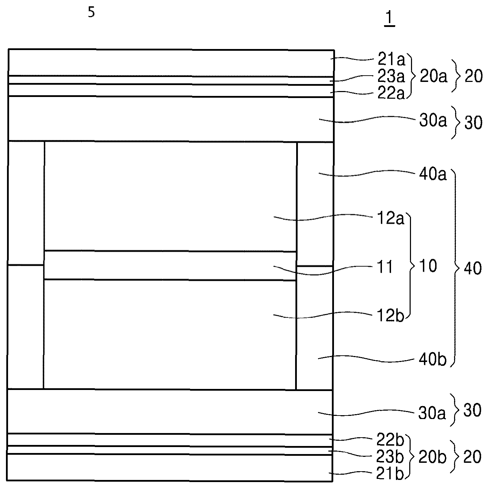

Referring to FIG. 5, the all-solid-state secondary battery 1 includes a positive electrode layer 10, a negative electrode layer 20, and a solid electrolyte layer 30, 30a, or 30b disposed therebetween, wherein the positive electrode layer 10 includes a positive electrode current collector 11 and a first positive electrode active material layer 12a and a second positive electrode active material layer 12b respectively disposed on both sides of the positive electrode current collector 11, the solid electrolyte layer 30 includes a first solid electrolyte layer 30a in contact with the first positive electrode active material layer 12a and a second solid electrolyte layer 30b in contact with the second positive electrode active material layer 12b, the negative electrode layer 20 includes a first negative electrode layer 20a in contact with the first solid electrolyte layer 30a and a second negative electrode layer 20b in contact with the second solid electrolyte layer 30b, and the inactive member 40 is located to surround side surfaces of the positive electrode layer 10 between the first solid electrolyte layer 30a and the second solid electrolyte layer 30b facing each other. The inactive member 40 includes, for example, a first inactive member 40a in contact with the first solid electrolyte layer 30a and a second inactive member 40b in contact with the second solid electrolyte layer 30b. Therefore, the all-solid-state secondary battery 1 has a bi-cell structure. Because the all-solid-state secondary battery 1 has such a bi-cell structure, the solid electrolyte layers 30 and the negative electrode layers 20 are symmetrically arranged to face each other about the positive electrode layer 10, structural deformation caused by a pressure applied during manufacturing of the all-solid-state secondary battery 1 is inhibited more effectively. Therefore, cracks are inhibited in the solid electrolyte layer 30 during a manufacturing process and/or a charging and discharging process of the all-solid-state secondary battery 1 and a short circuit of the all-solid-state secondary battery 1 caused thereby is prevented, resulting in further improvement of cycle characteristics of the all-solid-state secondary battery 1. In addition, by using one positive electrode current collector 11 for a plurality of positive electrode active material layers 12a and 12b, energy density of the all-solid-state secondary battery 1 is increased.

Referring to FIGS. 3 to 5, the inactive member 40 is, for example, a flame-retardant inactive member. Because the flame-retardant inactive member provides flame retardancy, thermal runaway and ignition of the all-solid-state secondary battery 1 may be prevented. As a result, safety of the all-solid-state secondary battery 1 may further be improved. Because the flame-retardant inactive member absorbs moisture remaining in the all-solid-state secondary battery 1, deterioration of the all-solid-state secondary battery 1 is prevented so as to improve lifespan characteristics of the all-solid-state secondary battery 1.

The flame-retardant inactive member includes, for example, a matrix and a filler. The matrix includes, for example, a substrate and a reinforcement. The matrix includes, for example, a fibrous substrate and a fibrous reinforcement. By including the substrate, the matrix may have elasticity. Therefore, the matrix may effectively absorb a volume change during charging and discharging of the all-solid-state secondary battery 1 and is arranged in various positions. The substrate included in the matrix includes, for example, a first fibrous material. Because the substrate includes the first fibrous material, a volume change of the positive electrode layer 10 is effectively absorbed during charging and discharging of the all-solid-state secondary battery 1, and deformation of the first inactive member 40 caused by the volume change of the positive electrode layer 10 may effectively be inhibited. The first fibrous material is, for example, a material having an aspect ratio of 5 or more, 20 or more, or 50 or more. The first fibrous material is, for example, a material having an aspect ratio of 5 to 1000, 20 to 1000, or 50 to 1000. The first fibrous material is, for example, an insulating material. Because the first fibrous material is an insulating material, a short circuit occurring between the positive electrode layer 10 and the negative electrode layer 20 caused by lithium dendrite and the like formed during a charging and discharging process of the all-solid-state secondary battery 1 may effectively be inhibited. The first fibrous material includes, for example, at least one selected from pulp fibers, insulating polymer fibers, and ion-conductive polymer fibers. Because the matrix includes the reinforcement, strength of the matrix is increased. Therefore, the matrix may prevent an excessive volume change during charging and discharging of the all-solid-state secondary battery 1 and prevent deformation of the all-solid-state secondary battery. The reinforcement included in the matrix includes, for example, a second fibrous material. Because the reinforcement includes the second fibrous material, strength of the matrix may be increased more uniformly. The second fibrous material is, for example, a material having an aspect ratio or 3 or more, 5 or more, or 10 or more. The first fibrous material is, for example, a material having an aspect ratio of 3 to 100, 5 to 100, or 10 to 100. The second fibrous material is, for example, a flame-retardant material. Because the second fibrous material is the flame-retardant material, ignition caused by thermal runaway during a charging and discharging process of the all-solid-state secondary battery 1 or due to an external impact may be effectively prevented. The second fibrous material is, for example, glass fibers, metal oxide fibers, and ceramic fibers.

The flame-retardant inactive member includes a filler in addition to the matrix. The filler may be located inside the matrix, on the surface of the matrix, or both inside and on the surface of the matrix. The filler is, for example, an inorganic material. The filler included in the flame-retardant inactive member is, for example, a moisture getter, a flame retardant, or a lithium immobilizer. The moisture getter absorbs moisture, for example, at a temperature below 100°C to remove moisture remaining in the all-solid-state secondary battery 1, thereby preventing deterioration of the all-solid-state secondary battery 1. If a temperature of the all-solid-state secondary battery 1 exceeds 150°C by a thermal runaway caused during a charging and discharging process of the all-solid-state secondary battery 1 or due to an external impact, the moisture getter may release the absorbed moisture, thereby effectively inhibiting ignition of the all-solid-state secondary battery 1. The moisture getter is, for example, a metal hydroxide having moisture absorbency. The metal hydroxide included in the filler is, for example, Mg(OH)₂, Fe(OH)₃, Sb(OH)₃, Sn(OH)₄, TI(OH)₃, Zr(OH)₄, Al(OH)₃, or any combination thereof. The flame retardant includes, for example, at least one selected from zinc borate, a calcium molybdate zinc complex, MoO₃, (NH₄)₂Mo₂O₇, Sb₂O₃, and Sb₃O₅. The lithium immobilizer may be, for example, a compound immobilizing lithium by reacting with liquid lithium at a temperature above 180 °C that is a melting temperature of lithium. For example, the lithium immobilizer may react with liquid lithium to convert lithium into an insoluble compound. The lithium immobilizer is, for example, a metal oxide reactive with liquid lithium. The metal oxide included in the filler is, for example, TiO₂, ZrO₂, HfO₂, ThO₂, or any combination thereof. The metal oxide reacts, for example, with a liquid lithium to produce Li₂O and a metal. A reaction scheme thereof is, for example, 4Li + MO₂ -> M + 2Li₂O. Because the liquid lithium reacts with the metal oxide to form a lithium oxide, the liquid lithium is immobilized. Leakage of the liquid lithium melting at a high temperature into the positive electrode layer may be inhibited. Therefore, stability of the all-solid-state secondary battery may be increased.

An amount of the filler included in the flame-retardant inactive member is, for example, 1 to 80 parts by weight, 5 to 80 parts by weight, 10 to 80 parts by weight, 20 to 80 parts by weight, 30 to 80 parts by weight, 40 to 80 parts by weight, 50 to 80 parts by weight, 60 to 80 parts by weight, or 65 to 80 parts by weight based on 100 parts by weight of the flame-retardant inactive member 40.

The flame-retardant inactive member may further include, for example, a binder. The binder may include, for example, a curable polymer or a non-curable polymer. The curable polymer is a polymer cured by heat and/or pressure. The curable polymer is, for example, a solid at room temperature. The flame-retardant inactive member includes, for example, a thermo-pressure curable film and/or a cured product thereof. The thermo-pressure curable polymer is, for example, TSA-66 manufactured by Toray.

The flame-retardant inactive member may further include another material in addition to the above-described substrate, reinforcement, filler, and binder. The flame-retardant inactive member may further include, for example, at least one selected from paper, an insulating polymer, an ion-conductive polymer, an insulating inorganic material, an oxide-based solid electrolyte, and a sulfide-based solid electrolyte. The insulating polymer may be, for example, an olefin-based polymer such as polypropylene (PP) and polyethylene (PE).

A density of the substrate or the reinforcement included in the flame-retardant inactive member may be, for example, 10 % to 300 %, 10 % to 150 %, 10 % to 140 %, 10 % to 130 %, or 10 % to 120 % of the density of the positive electrode active material included in the cathode active material layer 12.

The inactive member 40 is a member not including an electrochemically active material, such as an electrode active material. The electrode active material is a material that allows absorbing/desorbing of lithium. The inactive member 40 is formed of any material commonly used in the art, other than the electrode active material.

### [Preparation of All-solid-state Secondary Battery]

### (Preparation of Negative Electrode Layer)

A method of manufacturing a negative electrode layer includes, for example, providing a negative electrode current collector; and sequentially providing a first protective layer and a first negative electrode active material layer, wherein the first negative electrode active material layer includes a carbon-based material matrix and a metal-based negative electrode active material located within the carbon-based material matrix, the carbon-based material matrix includes a first carbon-based nanostructure, and the first protective layer includes a second carbon-based nanostructure.

The negative electrode current collector is provided. For detailed descriptions of the negative electrode current collector, refer to the above-described negative electrode current collector.

The sequentially providing of the first protective layer and the first negative electrode active material layer includes, for example, providing a negative electrode active material precursor onto the negative electrode current collector; and supplying a reaction gas including a carbon source gas to the negative electrode current collector provided with the negative electrode active material precursor, followed by heat treatment. During the heat treatment, the negative electrode active material is formed from the negative electrode active material precursor, the second carbon-based nanostructure grows by a gas phase reaction between the negative electrode current collector and the negative electrode active material to form the first protective layer, and the first carbon-based nanostructure grows by the gas phase reaction on the negative electrode active material to form the first negative electrode active material layer.

The providing of the negative electrode active material precursor onto the negative electrode current collector is performed, for example, by providing a precursor compound including a metal forming an alloy or compound with lithium onto the negative electrode current collector. The negative electrode active material precursor may be provided by a dry or wet method. For example, the negative electrode active material precursor may be disposed on the negative electrode current collector by applying a solution of the negative electrode active material precursor to the negative electrode current collector and drying the solution. The metal forming an alloy or compound with lithium includes gold (Au), platinum (Pt), palladium (Pd), silicon (Si), silver (Ag), aluminum (Al), bismuth (Bi), tin (Sn), and zinc (Zn), or any combination thereof. The precursor compound including the metal forming an alloy or compound with lithium is, for example, a nitrate of the metal forming an alloy or compound with lithium, a halide of the metal forming an alloy or compound with lithium, a phosphate of the metal forming an alloy or compound with lithium, or a sulfate of the metal forming an alloy or compound with lithium, but is not limited thereto, and any compounds commonly used in the art as a precursor compound may also be used. The Ag-containing precursor compound is, for example, silver nitrate (AgNO₃), silver acetate (CH₃COOAg), and silver diamine chloride (Ag(NH₃)₂Cl). The solvent dissolving the precursor compound is, for example, water and alcohol, but is not limited thereto. The alcohol is, for example, methanol or ethanol.

Subsequently, the reaction gas including a carbon source gas is supplied to the negative electrode current collector provided with the negative electrode active material precursor and heat-treated. The carbon source gas may further include, for example, at least one inert gas selected from nitrogen, helium, and argon.

The carbon source gas is a compound represented by Formula 9 below, a compound represented by Formula 10 below, a compound represented by Formula 11 below, or a mixed gas of at least two compounds selected from the compounds represented by Formulae 9, 10, and 11 below.

<Formula 9> CₙH₂ₙ₊₂

In Formula 9, n is from 1 to 20.

<Formula 10> CₙH₂ₙ

In Formula 10, n is from 2 to 6.

<Formula 11> CₙHₙ

In Formula 11, n is from 2 to 6.

The compound represented by Formula 9, the compound represented by Formula 10, and the compound represented by Formula 11 includes, for example, at least one selected from methane, acetylene, ethylene, and propylene.

After supplying the reaction gas including the carbon source gas to the negative electrode current collector provided with the negative electrode active material precursor and performing heat treatment, a cooling process using at least one inert gas selected from nitrogen, helium, and argon may further be performed. The cooling process refers to a process of adjusting the temperature to room temperature (about 20 °C to 25 °C).

In the method of manufacturing the negative electrode layer, the process of growing the carbon-based material to form the first protective layer and the first negative electrode active material layer may be performed under various conditions according to the gas phase reaction.

Under a first condition, for example, first, methane is supplied to a reactor in which the negative electrode current collector provided with the negative electrode active material precursor is placed, and the reactor is heated to a heat treatment temperature T. A heating time up to the heat treatment temperature T is from 10 minutes to 4 hours, and a heat treatment temperature (T) is 500 °C to 1100 °C. Heat treatment is performed at the heat treatment temperature T for a reaction time. The reaction time is, for example, 10 minutes to 8 hours. A product of heat treatment is cooled to room temperature to prepare a negative electrode layer. A cooling time from the heat treatment temperature T to room temperature is, for example, 10 minutes to 5 hours.

Under a second condition, for example, first, hydrogen is supplied to a reactor in which the negative electrode current collector provided with the negative electrode active material precursor is placed, and temperature is raised to the heat treatment temperature T. A heating time up to the heat treatment temperature T is from 10 minutes to 4 hours, and the heat treatment temperature (T) is 500 °C to 1100 °C. After heat treatment is performed at the heat treatment temperature T for a predetermined reaction time, methane gas is supplied, and heat treatment is performed for a residual reaction time. The reaction time is, for example, 10 minutes to 8 hours. A product of heat treatment is cooled to room temperature to prepare a negative electrode layer. Nitrogen is supplied during the process of cooling the product. A cooling time from the heat treatment temperature T to room temperature is, for example, 10 minutes to 5 hours.

Under a third condition, for example, first, hydrogen is supplied to a reactor in which the negative electrode current collector provided with the negative electrode active material precursor is placed, and temperature is raised to the heat treatment temperature T. A heating time up to the heat treatment temperature T is 10 minutes to 4 hours, and the heat treatment temperature (T) is 500 °C to 1100 °C. After heat treatment is performed at the heat treatment temperature T for predetermined reaction time, a mixed gas of methane and hydrogen is supplied and heat treatment is performed for residual reaction time. The reaction time is, for example, 10 minutes to 8 hours. The resultant product of heat treatment is cooled to room temperature to prepare a composite. Nitrogen is supplied during the process of cooling the product. A cooling time from the heat treatment temperature T to room temperature is, for example, 10 minutes to 5 hours.

The carbon source gas is: for example, methane; acetylene; a mixed gas including methane and an inert gas; or a mixed gas including acetylene and an inert gas.

The carbon source gas is, for example, a mixed gas of methane and nitrogen. In the mixed gas of methane and nitrogen, a molar ratio of methane to nitrogen is about 1:0.20 to 1:0.50, about 1:0.25 to 1:0.45, or about 1:0.30 to 1:0.40. The carbon source gas may not include the inert gas such as nitrogen. The carbon source gas is, for example, a mixed gas of acetylene and nitrogen. In the mixed gas of acetylene and nitrogen, a molar ratio of acetylene to nitrogen is about 1:0.20 to 1:0.50, about 1:0.25 to 1:0.45, or about 1:0.30 to 1:0.40. The carbon source gas may not include the inert gas such as nitrogen.

A heat treatment pressure may be selected in consideration of the heat treatment temperature, a composition of the gas mixture, and a desired thickness of the negative electrode layer. The heat treatment pressure may be controlled by adjusting an amount of an inflowing gas mixture and an amount of an outflowing gas mixture. The heat treatment pressure is, for example, 0.5 atm or more, 1 atm or more, 2 atm or more, 3 atm or more, 4 atm or more, or 5 atm or more.

A heat treatment time is not particularly limited and may be appropriately adjusted according to heat treatment temperature, heat treatment pressure, a composition of the gas mixture, and a desired thickness of the negative electrode layer. For example, the reaction time at the heat treatment temperature is 10 minutes to 100 hours, 30 minutes to 90 hours, or 50 minutes to 40 hours. As the heat treatment time increases, the amount of the growing carbon-based nanostructure may increase, and electrochemical properties of the negative electrode layer prepared thereby may be improved. However, this tendency may not necessarily be proportional to time. For example, after a predetermined time has elapsed, the growth of the carbon-based nanostructure may no longer occur or a growth rate thereof may decrease.

### (Preparation of Solid Electrolyte Layer)

The solid electrolyte layer may be prepared by a dry or wet method.

A method of manufacturing the solid electrolyte layer by a dry method includes: preparing a dry mixture by dry mixing a sulfide-based solid electrolyte and a binder; preparing a solid electrolyte layer by forming the dry mixture; and disposing the solid electrolyte layer between a positive electrode layer and a negative electrode layer, wherein an average particle diameter of the inorganic particles is 50 nm to 5 µm.

First, the sulfide-based solid electrolyte is mixed with the binder to prepare a dry mixture. Dry mixing refers to mixing in a state not including a processing solvent. The dry mixture refers to a mixture to which a processing solvent is not intentionally added. The processing solvent is, for example, a solvent used to prepare an electrode slurry. The binder is, for example, a dry binder. The dry binder refers to a binder not including a processing solvent. The processing solvent is, for example, water and NMP, but is not limited thereto, and any processing solvents commonly used to prepare electrode slurries may be used. The dry mixing may be performed by using a stirrer at a temperature of, for example, 25 to 85 °C or 65 to 85 °C. The dry mixing may be performed by using a stirrer at a rotational speed of, for example, 10 to 10000 rpm or 100 to 10000 rpm. The dry mixing may be performed, for example, using a stirrer for 1 to 200 minutes. The dry mixing may be performed, for example, once or more. By the dry mixing, a dry mixture including a fibrillated dry binder may be obtained. The stirrer is, for example, a mixer or a kneader. The stirrer includes, for example, a chamber; at least rotary shaft disposed in the chamber and rotating; and a blade rotatably coupled to the rotary shaft and arranged in a longitudinal direction of the rotary shaft. The blade may include, for example, at least one selected from a ribbon blade, a sigma blade, a Z blade, a dispersion blade, and a screw blade. By including the blade, the electrode active material, the dry conductive material, and the dry binder may be effectively mixed to prepare a dough-like mixture without using a solvent.

Subsequently, the dry mixture may be formed to prepare a solid electrolyte layer. The prepared dry mixture may be extruded into a sheet form by using an extrusion device. A pressure during the extrusion is, for example, 4 MPa to 100 MPa or 10 MPa to 90 MPa. The obtained mixture may be a sheet form. That is, the obtained mixture in the sheet form may be a solid electrolyte layer. The extrusion device may be, for example, a roller or an extruder. For descriptions of types and amounts of the sulfide-based solid electrolyte and the binder, refer to the above-described solid electrolyte layer. The binder may be omitted. For example, the sulfide-based solid electrolyte particles are partially sintered, and thus the binder may be omitted.

A method of manufacturing a solid electrolyte layer by a wet method includes: preparing a slurry by mixing a sulfide-based solid electrolyte, a binder, and a solvent; preparing a solid electrolyte layer by forming and drying the slurry; and disposing the solid electrolyte layer between a positive electrode layer and a negative electrode layer.

First, a sulfide-based solid electrolyte, a binder, and a solvent are mixed to prepare a slurry. For descriptions of the sulfide-based solid electrolyte and the binder, refer to the above-described solid electrolyte layer. The binder may be the same as or different from the binder used in the dry method. The binder included in the solid electrolyte layer is, for example, styrene butadiene rubber (SBR), polytetrafluoroethylene, polyvinylidene fluoride, or polyethylene, but is not limited thereto, and any binders commonly available in the art may also be used. The solvent is not particularly limited, and any solvent capable of dissolving the binder without reacting with the sulfide-based solid electrolyte may also be used. The solvent may be, for example, octyl acetate.

Subsequently, the slurry is formed and dried to prepare a solid electrolyte layer. For example, the solid electrolyte layer may be prepared by applying the slurry to a substrate, followed by drying, and separating the dried resultant. Methods for applying the slurry and drying conditions may be within the ranges commonly available in the art.

Subsequently, the solid electrolyte layer is disposed between the positive electrode layer and the negative electrode layer. The solid electrolyte layer may be disposed on the positive electrode layer and/or the negative electrode layer after being prepared as a separate layer as described above or by applying a slurry to the positive electrode layer and/or the negative electrode layer and drying the slurry.

### (Preparation of Positive Electrode Layer)

The positive electrode layer may be prepared by a wet or dry method.

The positive electrode layer may be prepared, for example, by a wet method. A positive electrode active material, a sulfide-based solid electrolyte, a conductive material, a binder, and a solvent are mixed to prepare a positive electrode slurry. The positive electrode slurry may be applied to a positive electrode current collector and dried to prepare the positive electrode layer. The solvent used for preparation of the positive electrode slurry is not particularly limited, and any solvents commonly used in the art in positive electrode slurries may also be used. The solvent used in the positive electrode slurry is, for example, para-xylene. For descriptions of types and amounts of the positive electrode current collector, the positive electrode active material, the conductive material, and the binder, refer to the above-described positive electrode layer.

The positive electrode layer may be prepared, for example, by a dry method. First, a positive electrode active material, a sulfide-based solid electrolyte, a conductive material, and a binder are mixed by a dry method to prepare a dry mixture. Subsequently, the dry mixture is formed to prepare a positive electrode active material layer. Then, the positive electrode active material layer is disposed on one or both sides of the positive electrode current collector and pressed to prepare a positive electrode layer. The binder is, for example, a dry binder. Preparation conditions and methods for the process of preparing and forming the dry mixture are substantially identical to the above-described preparation methods for the solid electrolyte layer. For descriptions of types and amounts of the positive electrode current collector, the positive electrode active material, the conductive material, and the binder, refer to the above-described positive electrode layer.

### (Preparation of All-solid-state Secondary Battery)

An all-solid-state secondary battery may be prepared, for example, as described below.

First, an electrode assembly including: a positive electrode layer; a negative electrode layer; and a solid electrolyte layer disposed between the positive electrode layer and the negative electrode layer is provided.

The solid electrolyte layer is disposed on the negative electrode layer such that the negative electrode active material layer is in contact with the solid electrolyte layer to prepare a negative electrode layer/solid electrolyte layer stack structure. Then, the solid electrolyte layer is disposed on one or both sides of the positive electrode layer to face the positive electrode active material layer to prepare a negative electrode layer/solid electrolyte layer/positive electrode layer stack structure. A gasket as an inactive member is arranged around the positive electrode layer to surround side surfaces of the positive electrode layer. The prepared negative electrode layer/solid electrolyte layer/positive electrode layer stack structure is plate pressed at 50 to 100 °C with a pressure of 300 to 600 MPa for 10 to 60 minutes. By such plate pressing treatment, the solid electrolyte layer is partially sintered to improve battery characteristics. The pressed stack structure is provided as an electrode assembly. The electrode assembly is sealed using a sealant to complete the manufacture of the all-solid-state secondary battery.

### Mode for Invention

Hereinafter, the present inventive concept will be described in more detail with reference to the following examples and comparative examples. However, these examples are illustrative only and are not intended to limit the purpose and scope of the present inventive concept.

Example 1: Methane 950-1000 °C, Horizontally Arranged Graphene Layer (First Protective Layer)/Ag-embedded Horizontally Arranged Graphene Layer (First Negative Electrode Active Material Layer), Mono-cell All-solid-state Secondary Battery

### (Preparation of Solid Electrolyte Layer, Dry)

1 part by weight of a polytetrafluoroethylene (PTFE) first binder and 1 part by weight of a polyvinylidene fluoride (PVDF) second binder were added to 98 parts by weight of a Li₆PS₅Cl sulfide-based solid electrolyte (D₅₀ = 10 mm, crystalline) that is argyrodite-type crystal and mixed in a grind mixer to prepare a mixture. The mixture was added a mortar heated to 80 °C and stirred to prepare a dough. The prepared dough was passed through rollers to a sheet form to prepare a solid electrolyte layer having a uniform thickness. By the above-described process, a solid electrolyte layer was prepared. A Young's modulus of the sulfide-based solid electrolyte was about 15 GPa to 30 GPa.

### (Preparation of Negative Electrode Layer)

A carbon layer as a first protective layer and a negative electrode active material-containing carbon layer as a first negative electrode active material layer were sequentially deposited on one side of a 20 µm-thick stainless steel (SUS304) thin film to prepare a negative electrode.

The first protective layer and the first negative electrode active material layer were formed according to a method described below.

AgNO₃, as an Ag precursor compound, was dissolved in methanol, as an organic solvent, to prepare an Ag precursor compound-containing composition.

The Ag precursor compound-containing composition was coated on the stainless steel (SUS304) thin film, and the organic solvent was removed therefrom to prepare a stainless steel (SUS304) coated with the Ag precursor compound.

After placing the Ag precursor compound-coated stainless steel (SUS304) thin film in a chamber, a temperature was raised to 1000 °C while supplying a mixture of a methane gas as a hydrocarbon gas and an argon gas as an inert gas to directly grow graphene horizontally arranged on the stainless steel (SUS304) thin film.

At a temperature of 400 °C above in the chamber, Ag ions were reduced to Ag particles and graphene horizontally arranged on the stainless steel (SUS304) current collector directly grew and were stacked to form a carbon layer. The carbon layer was formed between the stainless steel (SUS304) current collector and the Ag particles.

At a chamber temperature of 1000 °C, graphene grew from the Ag particles to form a carbon-based material matrix including graphene horizontally arranged on the carbon layer. The Ag particles were dispersed and embedded in the carbon-based material matrix. A shell including amorphous carbon was formed on the surface of the Ag particle. A particle diameter of the Ag core was about 50 nm. A thickness of the shell was about 10 nm.

A thickness of the carbon layer, as the first protective layer, was about 500 nm. A thickness of the Ag-containing carbon layer, as the first negative electrode active material layer, was about 3 µm.

It was confirmed that the first protective layer included graphene arranged and stacked in a direction parallel to the surface of the stainless steel (SUS304) current collector based on cross-sectional images of the negative electrode obtained by a transmission electron microscope (TEM) and a high-resolution scanning electron microscope (HR-SEM). It was also confirmed that the first negative electrode active material layer included graphene arranged in a direction parallel to the surface of the stainless steel (SUS304) current collector and Ag cores. It was also confirmed that shells including amorphous carbon were formed on the Ag cores. The initial charging capacity of the negative electrode layer (i.e., first negative electrode active material layer) was measured by using the above-described half-cell.

### (Preparation of Positive Electrode Layer)

Li₂O-ZrO₂ (LZO)-coated LiNi_{0.8}Co_{0.15}Mn_{0.05}O₂ (NCM) was prepared as a positive electrode active material. The LZO-coated positive electrode active material was prepared according to the method disclosed in Korean Patent Laid-open Publication No. 10-2016-0064942. As a solid electrolyte, Li₆PS₅Cl (D50 = 0.5 µm, crystalline) that is an argyrodite-type crystal was prepared. As a binder, a polytetrafluoroethylene (PTFE) binder was prepared. As a conductive material, carbon nanofibers (CNFs)were prepared. These materials were mixed with a xylene solvent such that a weight ratio of the positive electrode active material: solid electrolyte: conductive material: binder was 84:11.5: 3:1.5 to prepare a slurry. The slurry was formed in a sheet form and dried in a vacuum at 40 °C for 8 hours to prepare a positive electrode sheet. The prepared positive electrode sheet was disposed on a carbon layer of a positive electrode current collector, which is formed of an Al foil coated with the carbon layer on one side, and roll pressed while heating at 85 °C to prepare a positive electrode layer. A total thickness of the positive electrode layer was about 120 µm. A thickness of the positive electrode active material layer was about 95 µm, and a thickness of the carbon-coated Al foil was about 25 µm. The initial charging capacity of the positive electrode layer (i.e., positive electrode active material layer) was measured by using the above-described half-cell. A ratio B/A of an initial charging capacity B of the first negative electrode active material layer to an initial charging capacity A of the positive electrode active material layer was less than 0.45. The initial charging capacity of the positive electrode active material layer was determined by charging from the 1^{st} open circuit voltage to 4.2 V vs. Li/Li⁺. The initial charging capacity of the first negative electrode active material layer was determined by charging from the 2^{nd} open circuit voltage to 0.01 V vs. Li/Li⁺. In addition, the ratios (B/A) in Examples 2 to 5 were less than 0.45, respectively.

### (Inactive Member)

A slurry prepared by mixing pulp fibers (cellulose fibers), glass fibers, aluminum hydroxide (Al(OH)₃), an acrylic binder, and a solvent was formed in a gasket form, and the solvent was removed therefrom to prepare a flame-retardant inactive member.

A weight ratio of the pulp fibers (cellulose fibers), glass fibers, aluminum hydroxide (Al(OH)₃), and the acrylic binder was 20:8:70:2. A thickness of the inactive member was about 120 µm. The prepared flame-retardant member was left at room temperature for one week and then used.

The inactive member was heat-treated in a vacuum at 80 °C for 5 hours to remove moisture from the inactive member before being applied to the all-solid-state secondary battery.

### (Preparation of All-solid-state Secondary Battery)

Referring to FIG. 3, the solid electrolyte layer was disposed on the negative electrode layer such that the first negative electrode active material layer was in contact with the solid electrolyte layer. The flame-retardant inactive member was disposed on the solid electrolyte layer by pressing while heating to prepare a negative electrode layer/solid electrolyte layer/inactive member stack structure.

The inactive member was disposed on one side of the positive electrode layer to face the positive electrode active material layer to prepare a negative electrode layer/solid electrolyte layer/positive electrode layer electrode assembly. The inactive member was disposed around the positive electrode layer to surround side surfaces of the positive electrode layer and to be in contact with the solid electrolyte layer. The inactive member was used as a gasket. The positive electrode layer was located at a central region of the solid electrolyte layer, and the gasket was located to surround the positive electrode layer and to extend to an end portion of the solid electrolyte layer. An area of the positive electrode layer was about 90 % of an area of the solid electrolyte layer, and the gasket was located over the entire area of the remaining 10 % area of the solid electrolyte layer on which the positive electrode layer was not located.

The prepared negative electrode layer/solid electrolyte layer/positive electrode layer electrode assembly was plate pressed at 85 °C with a pressure of 500 MPa for 30 minutes. By such pressing treatment, the solid electrolyte layer was sintered to improve battery characteristics. A thickness of the sintered solid electrolyte layer was about 45 µm. The sintered electrode assembly was added to a pouch and sealed to prepare a sealed electrode assembly. Portions of the positive electrode current collector and the negative electrode current collector protruding toward the outside of the sealed electrode assembly were used as a positive electrode layer terminal and a negative electrode layer terminal.

The electrode assembly was disposed between two press plates (not shown) and the two press plates were fastened together with screws, and then a constant pressure was applied to both sides of the electrode assembly to prepare an all-solid-state secondary battery.

Example 2: Methane 750-950 °C, Horizontally Arranged Graphene Layer (First Protective Layer)/Ag-embedded Irregularly Arranged Graphene Layer (First Negative Electrode Active Material Layer), Mono-cell All-solid-state Secondary Battery

A negative electrode and an all-solid-state secondary battery were prepared in the same manner as in Example 1, except that the deposition temperature was changed to 850 °C.

A carbon layer as a first protective layer and a negative electrode active material-containing carbon layer as a first negative electrode active material layer were sequentially deposited on one side of a 20 µm-thick stainless steel (SUS304) thin film to prepare a negative electrode.

The first protective layer had a structure in which graphene horizontally arranged with respect to the surface of the stainless steel (SUS304) was stacked in multiple layers.

The first negative electrode active material layer had a structure in which a carbon-based material matrix formed of irregularly arranged flake-shaped graphene was located and Ag particles, serving as a negative electrode active material, were dispersed and embedded in the carbon-based material matrix.

Shells including amorphous carbon were coated on the Ag particles.

A thickness of the carbon layer, as the first protective layer, was about 500 nm. A thickness of the Ag-containing carbon layer, as the first negative electrode active material layer, was about 3 µm.

It was confirmed that the first protective layer included graphene arranged and stacked in a direction parallel to the surface of the stainless steel (SUS304) current collector based on cross-sectional images of the negative electrode obtained by a transmission electron microscope (TEM) and a high-resolution scanning electron microscope (HR-SEM). In addition, it was confirmed that the first negative electrode active material layer included graphene irregularly arranged therein and Ag cores. It was also confirmed that shells including amorphous carbon were formed on the Ag cores.

Example 3: Acetylene, 700-900 °C, Protruding Graphene Layer (First Protective Layer)/Ag-embedded Irregularly Arranged Graphene Layer (First Negative Electrode Active Material Layer), Mono-cell All-solid-state Secondary Battery

A negative electrode and an all-solid-state secondary battery were prepared in the same manner as in Example 1, except that the deposition temperature was changed to 800 °C and the hydrocarbon gas was changed to acetylene.

A carbon layer as a first protective layer and a negative electrode active material-containing carbon layer as a first negative electrode active material layer were sequentially deposited on one side of a 20 µm-thick stainless steel (SUS304) thin film to prepare a negative electrode.

The first protective layer had a structure in which graphene arranged with respect to the surface of the stainless steel (SUS304) was stacked in multiple layers.

The first negative electrode active material layer had a structure in which a carbon-based material matrix formed of irregularly arranged flake-shaped graphene was located and Ag particles, serving as a negative electrode active material, were dispersed and embedded in the carbon-based material matrix.

Shells including amorphous carbon were coated on the Ag particles. The first negative electrode active material layer had pores formed by irregularly arranged graphene in the carbon-based material matrix.

A thickness of the carbon layer, as the first protective layer, was about 500 nm. A thickness of the Ag-containing carbon layer, as the first negative electrode active material layer, was about 3 µm.

It was confirmed that the first protective layer included graphene arranged and stacked in a direction protruding with respect to the surface of the stainless steel (SUS304) current collector based on cross-sectional images of the negative electrode obtained by a transmission electron microscope (TEM) and a high-resolution scanning electron microscope (HR-SEM). It was also confirmed that the first negative electrode active material layer included graphene irregularly arranged therein and Ag cores. It was also confirmed that shells including amorphous carbon were formed on the Ag cores.

Example 4: Acetylene, 500-700 °C, Protruding Graphene Layer (First Protective Layer)/Ag-embedded Irregularly Arranged Graphene Layer (First Negative Electrode Active Material Layer), Mono-cell All-solid-state Secondary Battery

A negative electrode and an all-solid-state secondary battery were prepared in the same manner as in Example 1, except that the heat treatment temperature was changed to 600 °C and the hydrocarbon gas was changed to acetylene.

A carbon layer as a first protective layer and a negative electrode active material-containing carbon layer as a first negative electrode active material layer were sequentially deposited on one side of a 20 µm-thick stainless steel (SUS304) thin film to prepare a negative electrode current collector.

The first protective layer had a structure in which graphene arranged in a direction protruding with respect to the surface of the stainless steel (SUS304) was stacked in multiple layers.

The first negative electrode active material layer had a structure in which a carbon-based material matrix including irregularly arranged flake-shaped graphene was located and Ag particles, serving as a negative electrode active material, were dispersed and embedded in the carbon-based material matrix.

Shells including amorphous carbon were coated on the Ag particles. The first negative electrode active material layer had pores formed by irregularly arranged graphene in the carbon-based material matrix.

A porosity of the first negative electrode active material layer of Example 4 was greater than a porosity of the first negative electrode active material layer of Example 3.

A thickness of the carbon layer, as the first protective layer, was about 500 nm. A thickness of the Ag-containing carbon layer, as the first negative electrode active material layer, was about 3 µm.

It was confirmed that the first protective layer included graphene arranged and stacked in a direction protruding with respect to the surface of the stainless steel (SUS304) current collector based on cross-sectional images of the negative electrode obtained by a transmission electron microscope (TEM) and a high-resolution scanning electron microscope (HR-SEM). It was also confirmed that the first negative electrode active material layer included graphene irregularly arranged therein and Ag cores. It was also confirmed that shells including amorphous carbon were formed on the Ag cores.

Example 5: Bi-cellAll-solid-state Secondary Battery

### (Preparation of Solid Electrolyte Layer, Negative Electrode Layer, and Inactive Member)

Preparation was performed in the same manner as in Example 1.

### (Preparation of Positive Electrode Layer)

Li₂O-ZrO₂ (LZO)-coated LiNi_{0.8}Co_{0.15}Mn_{0.05}O₂ (NCM) was prepared as a positive electrode active material. The LZO-coated positive electrode active material was prepared according to the method disclosed in Korean Patent Laid-open Publication No. 10-2016-0064942. As a solid electrolyte, Li₆PS₅Cl (D50 = 0.5 µm, crystalline) that is an argyrodite-type crystal was prepared. As a binder, a polytetrafluoroethylene (PTFE) binder was prepared. As a conductive material, carbon nanofibers (CNFs) were prepared. These materials were mixed with a xylene solvent such that a weight ratio of the positive electrode active material: solid electrolyte: conductive material: binder was 84:11.5: 3:1.5 to prepare a slurry. The slurry was formed in a sheet form and dried in a vacuum at 40 °C for 8 hours to prepare a positive electrode sheet. The prepared positive electrode sheet was disposed on both sides of a positive electrode current collector, which is formed of an AI foil coated with the carbon layer on both sides, and roll pressed while heating at 85 °C to prepare a positive electrode layer. A total thickness of the positive electrode layer was about 220 µm. A thickness of the positive electrode active material layer was about 96 µm, and a thickness of the carbon-coated Al foil was about 28 µm.

### (Preparation of All-solid-state Secondary Battery)

Referring to FIG. 4, the solid electrolyte layer was disposed on the negative electrode layer such that the first negative electrode active material layer was in contact with the solid electrolyte layer. The flame-retardant inactive member was disposed on the solid electrolyte layer by pressing while heating to prepare two negative electrode layer/solid electrolyte layer/inactive member stack structures.

The inactive member was disposed on both sides of the positive electrode layer to face the positive electrode active material layer to prepare a negative electrode layer/solid electrolyte layer/positive electrode layer /solid electrolyte layer/negative electrode layer electrode assembly. The inactive member was disposed around the positive electrode layer to surround side surfaces of the positive electrode layer and to be in contact with the solid electrolyte layer. The inactive member was used as a gasket. The positive electrode layer was located at a central region of the solid electrolyte layer, and the gasket was located to surround the positive electrode layer and to extend to an end portion of the solid electrolyte layer. An area of the positive electrode layer was about 90 % of an area of the solid electrolyte layer, and the gasket was located over the entire area of the remaining 10 % area of the solid electrolyte layer on which the positive electrode layer was not located.

An all-solid-state secondary battery was prepared in the same manner as in Example 1 by using the prepared electrode assembly.

### Comparative Example 1: Coating Layer-free Negative Electrode Current Collector

A negative electrode and an all-solid-state secondary battery were prepared in the same manner as in Example 1, except that the 20 µm-thick stainless steel (SUS304) was used as a negative electrode current collector.

Comparative Example 2: Negative Electrode Current Collector Only Including Carbon Layer (First Protective Layer), (First Negative Electrode Active Material Layer-Omitted)

A negative electrode and an all-solid-state secondary battery were prepared in the same manner as in Example 1, except that only the carbon layer, as the first protective layer, was introduced onto one side of the 20 µm-thick stainless steel (SUS304) thin film without using the Ag precursor compound.

Comparative Example 3: Graphene-Wet coated (First Protective Layer) + Ag-Carbon-wet Coated (First Negative Electrode Active Material Layer) Negative Electrode Current Collector

A negative electrode and an all-solid-state secondary battery were prepared in the same manner as in Example 1, except that a first protective layer and a first negative electrode active material layer were introduced onto one side of the 20 µm-thick stainless steel (SUS304) thin film by a wet method, respectively.

The negative electrode layer was prepared according to the following method.

### (Preparation of Negative Electrode Layer)

A negative electrode current collector was prepared by applying a carbon layer and a first negative electrode active material layer to one side of a 20 µm-thick stainless steel (SUS304) thin film by a wet coating method.

The carbon layer was prepared by applying a graphene dispersion to the Cu foil and drying. The graphene dispersion was prepared by dispersing graphene oxide and a polyvinylidene fluoride (PVDF) binder in N-methyl pyrrolidone.

As a negative electrode active material, carbon black (CB) having a primary particle diameter of about 30 nm and silver (Ag) particles having an average particle diameter (D50) of about 60 nm were prepared.

4 g of mixed powder of the carbon black (CB) and silver (Ag) particles mixed in a weight ratio of 3:1 was added to a container, and 4 g of a NMP solution including 7 wt% of a PVDF binder (# 9300 manufactured by Kureha Corporation) was added thereto to prepare a mixed solution. Subsequently, NMP was gradually added to the mixed solution while stirring the mixed solution to prepare a slurry. The prepared slurry was applied to the carbon layer of the prepared negative electrode current collector by using a bar coater and dried in the air at 80 °C for 10 minutes. A stack structure obtained thereby was dried at 40 °C for 10 hours in a vacuum. The dried stack structure was cold roll pressed to planarize the surface of the first negative electrode active material layer of the stack structure. According to the above-described process, a negative electrode layer was prepared.

A thickness of the first negative electrode active material layer included in the negative electrode layer was about 10 µm. A thickness of the carbon layer, as the first protective layer, was about 1 µm .

### Reference Example 1: Inactive Member-free

An all-solid-state secondary battery was prepared in the same manner as in Example 1, except that the inactive member was not disposed around the positive electrode active material layer.

### Evaluation Example 1: Evaluation of Crystallinity and Porosity

Crystallinity of the negative electrode layers prepared in Examples 1 to 4 was evaluated by using XRD, Raman, and TEM.

Relative crystallinity of the negative electrode layers was evaluated by using relative peak intensity ratios (I_{D}/I_{G}) of D-band peak intensity (I_{D}) at around 1350 cm⁻¹ derived from amorphous carbon to G-band peak intensity (I_{G}) at around 1580 cm⁻¹ derived from crystalline carbon in Raman spectra of the negative electrode layers. As the peak intensity ratio (I_{D}/I_{G}) increases, crystallinity decreases. As the peak intensity ratio (I_{D}/I_{G}) decreases, crystallinity increases. Measurement results are shown in Table 1 below.

For example, relative crystallinity of the negative electrode layers was evaluated by using peak intensity and/or full width at half maximum in the XRD spectra of the negative electrode layers and high-resolution TEM images and diffraction patterns of the negative electrode layers.

Porosity of the negative electrode layers prepared in Examples 1 to 4 was measured by using a gas adsorption method (multi-point BET). Measurement results are shown in Table 1 below.

Crystallinity and porosity were evaluated on the first negative electrode active material layer and the first protective layer of the negative electrode layer.

The negative electrode layer prepared in Example 1 had the highest crystallinity, and the negative electrode layer prepared in Example 4 had the lowest crystallinity.

In the all-solid-state secondary batteries of Examples 1 to 4, the relative crystallinity of the negative electrode layers was in the order of Example 1 > Example 2 > Example 3 > Example 4.

The negative electrode layer prepared in Example 1 had the lowest relative porosity, and the negative electrode layer prepared in Example 4 had the highest relative porosity.

In the all-solid-state secondary batteries of Examples 1 to 4, the relative crystallinity of the negative electrode layers was in the order of Example 4 > Example 3 > Example 2 > Example 1.

**[Table 1]**

| | Raman peak intensity ratio (I_{D}/I_{G}) | Porosity [%] |
|---|---|---|
| Example 1 (1000 °C, methane) | Less than 1.5 | Less than 2 |
| First protective layer: horizontally arranged graphene | | |
| First negative electrode active material layer: horizontally arranged graphene + Ag particle-embedded | | |
| Example 2 (850 °C, methane) | 2.3 | 5 |
| First protective layer: horizontally arranged graphene | | |
| First negative electrode active material layer: irregularly arranged graphene + Ag particle-embedded | | |
| Example 3 (800 °C, acetylene) | 3.3 | 12 |
| First protective layer: protruding graphene | | |
| First negative electrode active material layer: irregularly arranged graphene + Ag particle-embedded | | |
| Example 4 (600 °C, acetylene) | 4.8 | 23 |
| First protective layer: protruding graphene | | |
| First negative electrode active material layer: irregularly arranged graphene + Ag particle-embedded | | |
| Comparative Example 2 (SUS/Dry graphene layer structure) | Less than 1.5 | Less than 1.0 |
| First protective layer: horizontally arranged graphene | | |
| First negative electrode active material layer: free | | |

| | | |
|---|---|---|
| Evaluation Example 2: Charging/discharging Test | | |

Charging and discharging characteristics of each of the all-solid-state secondary batteries prepared in Examples 1 to 5, Comparative Examples 1 to 3, and Reference Example 1 were evaluated by the following charging/discharging test. The charging and discharging test was performed by placing the all-solid-state secondary battery in a thermostatic bath at 45 °C.

A first cycle was performed by charging each battery at a constant current of 0.1 C until a battery voltage reached 4.2 V. Once the voltage reached 4.2 V, the battery was charged at a constant voltage of 4.2 V under a cut-off condition of 0.05 C. Subsequently, the battery was discharged at a constant current of 0.1 C until the battery voltage reached 2.6 V.

After the second cycle, charging and discharging were repeated up to 800 cycles under the same conditions as the first cycle. An increased number of cycles at which a short circuit occurs means improved lifespan characteristics. Measurement results are shown in Table 2 below.

**Table 2**

| | No. of cycles at which short circuit occurs [times] |
|---|---|
| Example 1 (1000 °C, methane), SUS current collector | 800 |
| First protective layer: horizontally arranged graphene | |
| First negative electrode active material layer: horizontally arranged graphene + Ag particle-embedded | |
| Example 2 (850 °C, methane), SUS current collector | 720 |
| First protective layer: horizontally arranged graphene | |
| First negative electrode active material layer: irregularly arranged graphene + Ag particle-embedded | |
| Example 3 (800 °C, acetylene), SUS current collector | 600 |
| First protective layer: protruding graphene | |
| First negative electrode active material layer: irregularly arranged graphene + Ag particle-embedded | |
| Example 4 (600 °C, acetylene), SUS current collector | 480 |
| First protective layer: protruding graphene | |
| First negative electrode active material layer: irregularly arranged graphene + Ag particle-embedded | |
| Comparative Example 1 (SUS foil alone) | 18 |
| First protective layer: free | |
| First negative electrode active material layer: free | |
| Comparative Example 2 (SUS/Dry graphene layer structure) | 200 |
| First protective layer: horizontally arranged graphene | |
| First negative electrode active material layer: free | |
| Comparative Example 3 (SUS/Wet graphene layer/Ag + C blend layer) | 160 |
| First protective layer: wet graphene layer | |
| First negative electrode active material layer: Ag+C blend layer | |

As shown in Table 2, the all-solid-state secondary batteries of Examples 1 to 4 provided improved lifespan characteristics compared to the all-solid-state secondary batteries of Comparative Examples 1 to 3.

The all-solid-state secondary battery of Example 4 had relatively lower crystallinity of the first protective layer and the first negative electrode active material layer than that of the all-solid-state secondary batteries of Examples 1 to 3, and thus it was considered that the deterioration of the negative electrode current collector was relatively increased by the solid electrolyte.

The all-solid-state secondary battery of Comparative Example 1 did not include the first protective layer and the first negative electrode active material layer, thereby having inferior lifespan characteristics to that of the all-solid-state secondary batteries of Examples 1 to 4. It was considered that side reactions between the negative electrode current collector and the solid electrolyte increased in the all-solid-state secondary battery of Comparative Example 1 because the all-solid-state secondary battery did not include the first protective layer and the first negative electrode active material layer.

The all-solid-state secondary battery of Comparative Example 2 exhibited inferior lifespan characteristics to those of the all-solid-state secondary batteries of Example 1 to 4 because the first negative electrode active material layer was not included therein. It was considered that the all-solid-state secondary battery of Comparative Example 2 deteriorated because formation and growth of lithium dendrite were not effectively inhibited because the all-solid-state secondary battery did not include the first negative electrode active material layer.

The all-solid-state secondary battery of Comparative Example 3 exhibited relatively inferior lifespan characteristics to those of the all-solid-state secondary batteries of Example 1 to 4 because the wet graphene layer and the wet first active material layer were used. It was considered that side reactions between the negative electrode current collector and the solid electrolyte were not effectively inhibited by the wet graphene layer and the wet first negative electrode active material layer in the all-solid-state secondary battery of Comparative Example 3 compared to the first protective layers and the first negative electrode active material layers of Examples 1 to 4.

Although not shown in Table 1, the all-solid-state secondary battery of Example 5 had relatively improved lifespan characteristics due to improved structural stability compared to the all-solid-state secondary battery of Example 1.

Although not shown in Table 1, the all-solid-state secondary battery of Reference Example 1 had inferior lifespan characteristics to the all-solid-state secondary batteries of Examples 1 to 4 because the inactive member gasket was not included therein.

Formation of a lithium metal plated layer corresponding to the second negative electrode active material layer was confirmed between the solid electrolyte layer and the negative electrode current collector based on cross-sectional images obtained by using an SEM after the first cycle of charging was completed in the all-solid-state secondary batteries of Examples 1 to 4.

In the all-solid-state secondary batteries of Examples 1 to 4, relative bulk densities of the first protective layer (carbon layer) were in the order shown below: Example 1 ≒ Example 2 > Example 3 ≒ Example 4. The bulk densities of the dry first protective layers of Examples 1 to 4 were higher than the bulk density of the wet first protective layer of Comparative Example 3.

As described above, the all-solid-state secondary battery according to embodiments may be applied to various types of portable devices and vehicles.

Although exemplary embodiments are described above with reference to illustrated drawing, the present inventive concept is not limited thereto. It is obvious that various alternations and modifications will be apparent to one or ordinary skill in the art to which this application belongs within protection coverage of the inventive concept.

### EXPLANATION OF REFERENCE NUMERALS DESIGNATING THE MAJOR ELEMENTS OF THE DRAWINGS

| | | | |
|---|---|---|---|
| 1 | all-solid-state secondary battery | 10 | positive electrode layer |
| 11 | positive electrode current collector | 12 | positive electrode active material layer |
| 20 | negative electrolyte layer current collector | 21 | negative electrode |
| 22 | first negative electrode active material layer | 23 | first protective layer |
| 30 | solid electrolyte layer | 40 | inactive member |

### Industrial Applicability

By using the all-solid-state secondary battery having a new structure according to an embodiment, thickness uniformity of the negative electrode active material layer may be improved and aggregation of the negative electrode active material may be inhibited, and thus an all-solid-state secondary battery having inhibited short circuits and improved cycle characteristics may be provided.

## Claims

1. An all-solid-state secondary battery comprising: a positive electrode layer;
a negative electrode layer; and a solid electrolyte layer disposed between the positive electrode layer and the negative electrode layer,
wherein the positive electrode layer comprises: a positive electrode current collector; and a positive electrode active material layer, the solid electrolyte layer comprises a sulfide-based solid electrolyte,
the negative electrode layer comprises: a negative electrode current collector; a first negative electrode active material layer; and a first protective layer disposed between the negative electrode current collector and the first negative electrode active material layer,
the first negative electrode active material layer comprises a carbon-based material matrix and a metal-based negative electrode active material located within the carbon-based material matrix,
the carbon-based material matrix includes a first carbon-based nanostructure, and the first protective layer includes a second carbon-based nanostructure, and
a specific heat capacity of the negative electrode current collector is 450 J/Kg·K or more.

2. The all-solid-state secondary battery of claim 1, wherein the first carbon-
cased nanostructure comprises a two-dimensional carbon-based nanostructure, and
the two-dimensional carbon-based nanostructure comprises graphene, graphene oxide, reduced graphene oxide, or any combination thereof.

3. The all-solid-state secondary battery of claim 1, wherein the carbon-based material matrix comprises a first carbon-based nanostructure arranged in a direction.

4. The all-solid-state secondary battery of claim 1, wherein the carbon-based material matrix comprises a first carbon-based nanostructure irregularly arranged.

5. The all-solid-state secondary battery of claim 1, wherein the carbon-based material matrix comprises crystalline carbon, amorphous carbon, or any combination thereof.

6. The all-solid-state secondary battery of claim 1, wherein the carbon-based material matrix further comprises pores, and the carbon-based material matrix is a lithium host.

7. The all-solid-state secondary battery of claim 1, wherein the metal-based negative electrode active material comprises:
a core; and a shell formed on a surface of the core, and
the core comprises a metal forming an alloy or compound with lithium, and
the shell comprises a carbon-based material.

8. The all-solid-state secondary battery of claim 7, wherein the metal forming an alloy or compound with lithium comprises an alloy-forming element selected from gold (Au), platinum (Pt), palladium (Pd), silicon (Si), silver (Ag), aluminum (Al), bismuth (Bi), tin (Sn), zinc (Zn), or any combination thereof.

9. The all-solid-state secondary battery of claim 7, wherein the shell comprises a third carbon-based nanostructure, or the shell comprises amorphous carbon.

10. The all-solid-state secondary battery of claim 7, wherein the metal-based negative electrode active material has a particle form, a particle diameter of the core is about 10 nm to about 500 nm, and a thickness of the shell is about 50 nm or less.

11. The all-solid-state secondary battery of claim 1, wherein an amount of the metal-based negative electrode active material is 10 parts by weight or less based on 100 parts by weight of the carbon-based material matrix.

12. The all-solid-state secondary battery of claim 1, wherein a thickness of the
first negative electrode active material layer is about 20 µm or less, and the first negative electrode active material layer is binder-free,
a ratio (C1/C2) of a charging capacity C1 of the first negative electrode active material layer to a charging capacity C2 of the positive electrode active material layer is 0.001 to 0.45,
a thickness of the first negative electrode active material layer is greater than a thickness of the first protective layer, and
a peak intensity ratio (I_{D}/I_{G}) of D-band peak intensity (I_{D}) at around 1350 cm⁻¹ derived from amorphous carbon to G-band peak intensity (I_{G}) at around 1580 cm⁻¹ derived from crystalline carbon in a Raman spectrum of the negative electrode layer is 0.01 to 5.

13. The all-solid-state secondary battery of claim 1, wherein the second
carbon-based nanostructure comprises a two-dimensional carbon-based nanostructure, and
the two-dimensional carbon-based nanostructure comprises graphene, graphene oxide, reduced graphene oxide, or any combination thereof.

14. The all-solid-state secondary battery of claim 13, wherein the first
protective layer comprises a second carbon-based nanostructure arranged in a direction with respect to a surface of the negative electrode current collector,
the second carbon-based nanostructure is arranged in a direction parallel to the surface of the negative electrode current collector or in a direction protruding from the surface of the negative electrode current collector, and the second carbon-based nanostructure is stacked in a thickness direction of the first protective layer, and the second carbon-based nanostructure is stacked in 100 layers or fewer.

15. The all-solid-state secondary battery of claim 1, wherein the first protective layer is directly disposed on the negative electrode current collector, and the first protective layer is inert to the sulfide-based solid electrolyte, and a thickness of the first protective layer is about 2 µm or less, and the first protective layer is binder-free.

16. The all-solid-state secondary battery of claim 1, further comprising a
second negative electrode active material layer disposed between the solid electrolyte layer and the negative electrode current collector, wherein the second negative electrode active material layer is disposed at one or more positions between the first negative electrode active material layer and the first protective layer and between the first negative electrode active material layer and the solid electrolyte layer, and
the second negative electrode active material layer comprises a metal layer including lithium or a lithium alloy.

17. The all-solid-state secondary battery of claim 1, wherein the negative electrode current collector comprises stainless steel (SUS), titanium (Ti), iron (Fe), nickel (Ni), chromium (Cr), or any alloy thereof.

18. The all-solid-state secondary battery of claim 1, wherein the positive
electrode current collector comprises a base film, and a metal layer disposed on at least one surface of the base film,
the base film comprises a polymer, the polymer comprising polyethyleneterephthalate (PET), polyethylene (PE), polypropylene (PP), polybutyleneterephthalate (PBT), polyimide (PI), or any combination thereof, and
the metal layer comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.

19. The all-solid-state secondary battery of claim 1, further comprising an
inactive member disposed on one side surface of the positive electrode layer,
wherein the inactive member is disposed along side surfaces of the positive electrode layer to surround the positive electrode layer, and
the inactive member comprises a position determiner configured to determine a position of the inactive member on the solid electrolyte layer.

20. The all-solid-state secondary battery of claim 1, wherein the positive
electrode active material layer comprises a positive electrode active material,
the positive electrode active material comprises an oxide-based positive electrode active material, a sulfide-based positive electrode active material, or any combination thereof,
the oxide-based positive electrode active material comprises a lithium transition metal oxide, a metal oxide, or any combination thereof, the lithium transition metal oxide comprises lithium cobalt oxide, lithium nickel oxide, lithium nickel cobalt oxide, lithium nickel cobalt aluminum oxide, lithium nickel cobalt manganese oxide, lithium manganate, lithium iron phosphate, or any combination thereof, and the metal oxide comprises iron oxide, vanadium oxide, or any combination thereof, and
the sulfide-based positive electrode active material comprises nickel sulfide, copper sulfide, Li₂S, a Li₂S-containing composite, or any combination thereof.
